(19) Europäisches Patentamt

European Patent Office

Office européen des brevets

(11) **EP 4 765 609 A1**

(12) **EUROPEAN PATENT APPLICATION**

(43) Date of publication:
24.06.2026 Bulletin 2026/26

(21) Application number: 25224784.6

(22) Date of filing: **18.12.2025**

(51) International Patent Classification (IPC):
*H02M 1/44* (2007.01)    *H02M 7/5387* (2007.01)
*H02J 50/12* (2016.01)    *H02M 1/14* (2006.01)
*H02M 3/00* (2006.01)

(52) Cooperative Patent Classification (CPC):
H02M 1/14; H02J 50/12; H02M 1/44;
H02M 7/53878; H02M 3/01

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 18.12.2024  US 202463735735 P
21.07.2025  US 202563847620 P
17.11.2025  US 202519391011

(71) Applicant: **Apple Inc.**
**Cupertino, CA 95014 (US)**

(72) Inventors:
• **Sjoeroos, Jukka-pekka J**
**95014 Cupertino (US)**
• **Zhu, Guangqi**
**95014 Cupertino (US)**
• **Terry, Stephen C**
**95014 Cupertino (US)**
• **AbuKhalaf, Zaid A**
**95014 Cupertino (US)**

(74) Representative: **Pellegrini, Marie Claude**
**Withers & Rogers LLP**
**2 London Bridge**
**London SE1 9RA (GB)**

(54) **ELECTRONIC DEVICE WITH FREQUENCY DITHERING AND RIPPLE MITIGATION**

(57)    An electronic device configured to transfer wireless power to an additional electronic device can include a wireless power transfer coil; an inverter configured to receive switching signals based on a dithered clock signal and output corresponding alternating current signals to the wireless power transfer coil; and control circuitry that generates the dithered clock signal. The dithered clock signal can have a plurality of frequency steps. A duty cycle of the switching signals can be different between at least two different frequency steps of the plurality of frequency steps to compensate for different gains of the wireless power transfer from the electronic device to the additional electronic device at the at least two different frequency steps.

FIG. 1

EP 4 765 609 A1

## Description

### Cross-Reference To Related Applications

This application claims priority to U.S. Provisional Application No. 63/735,735 filed December 18, 2024 and entitled "Electronic Device with Frequency Dithering and Variable Timing Properties", and U.S. Provisional Application No. 63/847,620 filed on July 21, 2025, and entitled "Electronic Device with Frequency Dithering and Ripple Mitigation"; each of which are incorporated by reference herein in their entirety.

### Field

This relates generally to electronic devices, and, more particularly, to electronic devices with inverters.

### Background

Electronic devices sometimes include inverters that convert direct current (DC) power to alternating current (AC) power. The inverter may use a clock signal at a given frequency to output corresponding alternating current signals. It is desirable to improve the electromagnetic compatibility of the inverters.

### Summary

An electronic device configured to transfer wireless power to an additional electronic device can include a wireless power transfer coil; an inverter configured to receive switching signals based on a dithered clock signal and output corresponding alternating current signals to the wireless power transfer coil; and control circuitry that generates the dithered clock signal. The dithered clock signal can have a plurality of frequency steps. One or more timing properties of the switching signals can be different between at least two different frequency steps of the plurality of frequency steps to compensate for different wireless power transfer gains at the at least two different frequency steps.

The inverter can include four transistors controlled by two switching signals.

The timing properties can include operating phase of the inverter. The timing properties can include duty cycle of the switching signals.

The control circuitry can be configured to select the one or more timing properties of the at least two different frequency steps based on a real time operating conditions determined in communication with the additional electronic device. The real time operating condition can include received power information for the additional electronic device. The control circuitry can be configured to receive the received power information from the additional electronic device using the wireless power transfer coil. The received power information can include calibration measurements of rectifier voltage and rectifier current of the additional electronic device at a plurality of operating frequencies, duty cycles, and power levels. The control circuitry can calculate one or more gain values based at least in part on the calibration measurements. The received power information can include run time measurements of rectifier power and rectifier voltage of the additional electronic device. The control circuitry can calculate one or more timing property values based at least in part on the run time measurements. The real time operating condition can include a ripple message reported by the additional electronic device.

The control circuitry can be configured to receive the ripple magnitude from the additional electronic device using the wireless power transfer coil. The control circuitry can select the one or more timing properties of the at least two different frequency steps based on real time operating conditions determined without communication with the additional electronic device. The real time operating conditions can include an inverter input voltage ripple measured by the control circuitry. Where the one or more timing properties include a duty cycle, the control circuitry can increment or decrement the duty cycle responsive to: comparison of the inverter input voltage ripple measured by the control circuitry to a threshold; a determination whether the ripple voltage is increasing or decreasing over time; and a determination whether the duty cycle is increasing or decreasing over time.

The dithered clock signal can have the plurality of frequency steps in a repeated cycle. The repeated cycle of the dithered clock signal can include a step function that approximates a waveform. The dithered clock signal can have a unique frequency magnitude at every one of the plurality of frequency steps during the repeated cycle. The waveform can include a triangular waveform. The plurality of frequency steps during the repeated cycle can include thirty-two frequency steps during the repeated cycle.

An electronic device can include a wireless power transfer coil; an inverter configured to receive switching signals based on a dithered clock signal and output corresponding alternating current signals to the wireless power transfer coil; and control circuitry configured to generate the dithered clock signal. The dithered clock signal can have a plurality of frequency steps with unique frequency magnitudes. The dithered clock signal can have unique timing properties for at least two of the plurality of frequency steps selected to compensate for different wireless power transfer gains at the at least two different frequency steps. The unique timing properties can include operating phase of the inverter. The unique timing properties can include a duty cycle. The control circuitry can be configured to select the unique timing properties of the at least two different frequency steps based on a real time operating conditions determined in communication with the additional electronic device. The control circuitry can select the unique timing properties of the at least two different frequency steps based on real time operating conditions determined without communication with the additional electronic device.

## Brief Description of the Drawings

FIG. 1 is a schematic diagram of an illustrative wireless power system in accordance with some embodiments.

FIG. 2 is a schematic diagram of illustrative wireless power transmitting circuitry and wireless power receiving circuitry in a wireless power system in accordance with some embodiments.

FIG. 3 is a schematic diagram of an illustrative inverter in accordance with some embodiments.

FIG. 4 is a schematic diagram of an illustrative electronic device that includes dithering circuitry in accordance with some embodiments.

FIG. 5 is a graph of an illustrative dithered clock signal in accordance with some embodiments.

FIG. 6 is a graph of an illustrative modulating signal in accordance with some embodiments.

FIG. 7 is a graph of emission as a function of frequency for the illustrative dithered clock signal of FIG. 5 in accordance with some embodiments.

FIG. 8A is a graph of duty cycle as a function of time while illustrative wireless power transmitting circuitry operates with a constant duty cycle in accordance with some embodiments.

FIG. 8B is a graph of the rectifier output voltage of an illustrative power receiving device as a function of time while the power transmitting device uses the frequencies of FIG. 5 and the constant duty cycle of FIG. 8A in accordance with some embodiments.

FIG. 9A is a graph of duty cycle as a function of time while illustrative wireless power transmitting circuitry operates with a varying duty cycle in accordance with some embodiments.

FIG. 9B is a graph of the rectifier output voltage of an illustrative power receiving device as a function of time while the power transmitting device uses the frequencies of FIG. 5 and the varying duty cycle of FIG. 9A in accordance with some embodiments.

FIG. 10 is an illustrative graph showing how the duty cycle of an inverter may be varied at each frequency step in accordance with some embodiments.

FIGS. 11A and 11B are illustrative timing diagrams for inverter control signals when the inverter has different operating phases in accordance with some embodiments.

FIG. 12 is a state diagram of illustrative power transmitting circuitry with multiple operating modes in accordance with some embodiments.

FIG. 13 is a flowchart showing an illustrative method of operating a power transmitting device in accordance with some embodiments.

FIG. 14 is a simplified equivalent circuit model of a wireless power transfer system.

FIG. 15 is a simplified flow chart of a first duty compensation technique.

FIG. 16 is a simplified flow chart of a startup calibration phase of the first duty cycle compensation technique.

FIG. 17 is a simplified flow chart of a run time duty cycle calculation phase of the first duty cycle compensation technique.

FIG. 18 is a simplified flow chart of a second duty cycle compensation technique.

FIG. 19 is a plot showing ripple voltage vs. duty cycle when using the second duty cycle compensation technique.

## Detailed Description

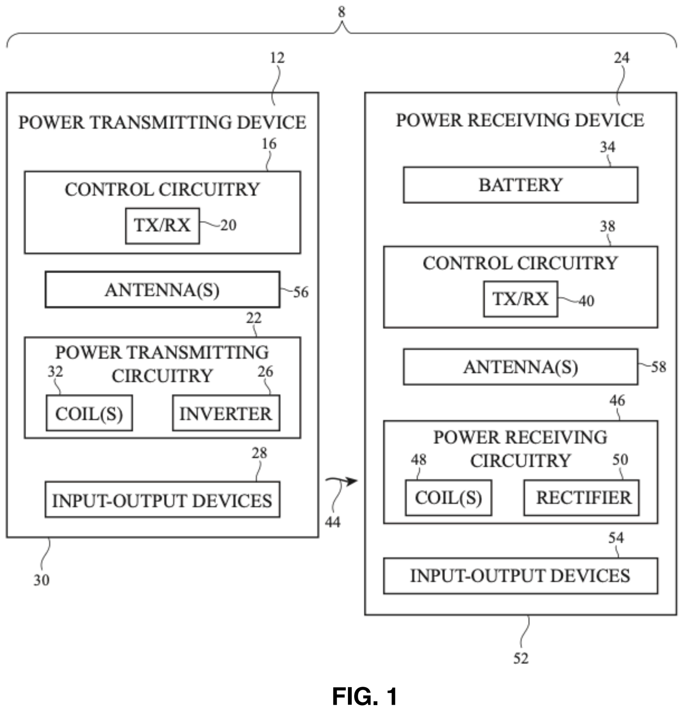

An illustrative wireless power system (also sometimes called a wireless charging system) is shown in FIG. 1. As shown in FIG. 1, wireless power system 8 may include one or more wireless power transmitting devices such as wireless power transmitting device 12 and one or more wireless power receiving devices such as wireless power receiving device 24. Wireless power system 8 may sometimes also be referred to herein as wireless power transfer (WPT) system 8 or wireless power system 8. Wireless power transmitting device 12 may sometimes also be referred to herein as power transmitter (PTX) device 12 or simply as PTX 12. Wireless power receiving device 24 may sometimes also be referred to herein as power receiver (PRX) device 24 or simply as PRX 24.

PTX device 12 includes control circuitry 16. Control circuitry 16 is mounted within housing 30. PRX device 24 includes control circuitry 38 mounted within a corresponding housing 52 for PRX device 24. Exemplary control circuitry 16 and control circuitry 38 are used in controlling the operation of WPT system 8. This control circuitry may include processing circuitry that includes one or more processors such as microprocessors, power management units, baseband processors, digital signal processors, microcontrollers, graphics processing units (GPUs), central processing units (CPUs), application processors (APs), application-specific integrated circuits with processing circuits, and/or other processing circuits. The processing circuitry implements desired control and communications features in PTX device 12 and PRX device 24. For example, the processing circuitry may be used in controlling power to one or more coils, determining and/or setting power transmission levels, generating and/or processing sensor data (e.g., to detect foreign objects and/or external electromagnetic signals or fields), processing user input, handling negotiations between PTX device 12 and PRX device 24, sending and receiving in-band and out-of-band data, making measurements, and/or otherwise controlling the operation of WPT system 8.

Control circuitry in WPT system 8 (e.g., control circuitry 16 and/or 38) is configured to perform operations in WPT system 8 using hardware (e.g., dedicated hardware or circuitry), firmware and/or software. Software code for performing operations in WPT system 8 is stored on non-transitory computer readable storage media (e.g., tangible computer readable storage media) in the control circuitry of WPT system 8. The software code may sometimes be referred to as software, data, program instructions, instructions, or code. The non-transitory computer readable storage media may include non-volatile memory such as non-volatile random-access memory (NVRAM), one or more hard drives (e.g., magnetic drives or solid state drives), one or more removable flash drives or other removable media, or the like. Software stored on the non-transitory computer readable storage media may be executed on the processing circuitry of control circuitry 16 and/or 38.

PTX device 12 may be a stand-alone power adapter (e.g., a wireless charging mat or charging puck that includes power adapter circuitry), may be a wireless charging mat or puck that is connected to a power adapter or other equipment by a cable, may be an electronic device (e.g., a laptop computer, a desktop computer, a computer monitor containing an embedded computer, a tablet computer, a cellular telephone, a media player, or other handheld or portable electronic device, a smaller device such as a wristwatch device, a pendant device, a headphone or earpiece device, a device embedded in eyeglasses, goggles, or other equipment worn on a user's head, or other wearable or miniature device, a television, a computer display that does not contain an embedded computer, a gaming device, a navigation device, a wireless internet-connected voice-controlled speaker, a home entertainment device, a remote control device, a gaming controller, a peripheral user input device, a wireless base station or access point, equipment that implements the functionality of two or more of these devices, or other electronic equipment), may be equipment that has been incorporated into furniture, a vehicle, or other system, may be a removable battery case, or may be other wireless power transfer equipment.

PRX device 24 may be an electronic device such as a laptop computer, a desktop computer, a computer monitor containing an embedded computer, a tablet computer, a cellular telephone, a media player, or other handheld or portable electronic device, a smaller device such as a wristwatch device, a pendant device, a headphone or earpiece device, a device embedded in eyeglasses, goggles, or other equipment worn on a user's head, or other wearable or miniature device, a wireless tracking tag, a television, a computer display that does not contain an embedded computer, a gaming device, a navigation device, a wireless internet-connected voice-controlled speaker, a home entertainment device, a remote control device, a gaming controller, a peripheral user input device, a wireless base station or access point, equipment that implements the functionality of two or more of these devices, or other electronic equipment.

PTX device 12 may be connected to a wall outlet (e.g., an alternating current power source), may be coupled to a wall outlet via an external power adapter, may have a battery for supplying power, and/or may have another source of power. In implementations where PTX device 12 is coupled to a wall outlet via an external power adapter, the adapter may have an alternating-current (AC) to direct current (DC) power converter that converts AC power from a wall outlet or other power source into DC power. If desired, PTX device 12 may include a DC-DC power converter for converting the DC power between different DC voltages. Additionally or alternatively, PTX device 12 may include an AC-DC power converter that generates the DC power from the AC power provided by the wall outlet (e.g., in implementations where PTX device 12 is connected to the wall outlet without an external power adapter). DC power may be used to power control circuitry 16. During operation, a controller in control circuitry 16 uses power transmitting circuitry 22 to transmit wireless power to power receiving circuitry 46 of PRX device 24.

Power transmitting circuitry 22 may have switching circuitry, such as inverter circuitry 26 formed from transistors, that are turned on and off based on control signals provided by control circuitry 16 to create AC current signals through one or more wireless power transmitting coils such as wireless power transmitting coil(s) 32. These coil drive signals cause coil(s) 32 to transmit wireless power. In implementations where coil(s) 32 include multiple coils, the coils may be disposed on a ferromagnetic structure, arranged in a planar coil array, or may be arranged to form a cluster of coils (e.g., two or more coils, 5-10 coils, at least 10 coils, 10-30 coils, fewer than 35 coils, fewer than 25 coils, or other suitable number of coils). In some implementations, PTX device 12 includes only a single coil 32.

As the AC currents pass through one or more coils 32, alternating-current electromagnetic (e.g., magnetic) fields (wireless power signals 44) are produced that are received by one or more corresponding receiver coils such as coil(s) 48 in PRX device 24. In other words, one or more of coils 32 is inductively coupled to one or more of coils 48. PRX device 24 may have a single coil 48, at least two coils 48, at least three coils 48, at least four coils 48, or another suitable number of coils 48. When the alternating-current electromagnetic fields are received by coil(s) 48, corresponding alternating-current currents are induced in coil(s) 48. The AC signals that are used in transmitting wireless power may have any desired frequency (e.g., 100-400 kHz, 1-100 MHz, between 1.7 MHz and 1.8 MHz, less than 2 MHz, between 100 kHz and 2 MHz, 6.78 MHz, 13.56 MHz, etc.). Rectifier circuitry such as rectifier circuitry 50, which contains rectifying components such as synchronous rectification transistors arranged in a bridge network, converts received AC signals (received alternating-current signals associated with wireless power signals 44) from one or more coils 48 into DC voltage signals for powering PRX device 24. Wireless power signals 44 are sometimes referred to herein as wireless power 44 or wireless charging signals 44. Coils 32 are sometimes referred to herein as wireless power transfer coils 32, wireless charging coils 32, or wireless power transmitting coils 32. Coils 48 are sometimes referred to herein as wireless power transfer coils 48, wireless charging coils 48, or wireless power receiving coils 48.

The DC voltage produced by rectifier circuitry 50 (sometime referred to as rectifier output voltage Vrect) may be used in charging a battery such as battery 34 and may be used in powering other components in PRX device 24 such as control circuitry 38, input-output (I/O) devices 54, etc. PTX device 12 may also include input-output devices such as input-output devices 28. Input-output devices 54 and/or input-output devices 28 may include input devices for gathering user input and/or making environmental measurements and may include output devices for providing a user with output.

As examples, input-output devices 28 and/or input-output devices 54 may include a display (screen) for creating visual output, a speaker for presenting output as audio signals, light-emitting diode status indicator lights and other light-emitting components for emitting light that provides a user with status information and/or other information, haptic devices for generating vibrations and other haptic output, and/or other output devices. Input-output devices 28 and/or input-output devices 54 may also include sensors for gathering input from a user and/or for making measurements of the surroundings of WPT system 8.

The example in FIG. 1 of PRX device 24 including battery 34 is illustrative. More generally, an electronic device may include a power storage device 34. Power storage device 34 may be a battery, or may be, for example, a supercapacitor that stores charge.

PTX device 12 and PRX device 24 may communicate wirelessly using in-band or out-of-band-communications. Implementations using in-band communication may utilize, for example, frequency-shift keying (FSK) and/or amplitude-shift keying (ASK) techniques to communicate in-band data between PTX device 12 and PRX device 24. Wireless power and in-band data transmissions may be conveyed using coils 32 and 48 concurrently. When PTX 12 sends in-band data to PRX 24, wireless transceiver (TX/RX) circuitry 20 may modulate wireless charging signal 44 to impart FSK or ASK communications, and wireless transceiver circuitry 40 may demodulate the wireless charging signal 44 to obtain the data that is being communicated. When PRX 24 sends in-band data to PTX 12, wireless transceiver (TX/RX) circuitry 40 may modulate wireless charging signal 44 to impart FSK or ASK communications, and wireless transceiver circuitry 20 may demodulate the wireless charging signal 44 to obtain the data that is being communicated.

Implementations using out-of-band-communication may utilize, for example, hardware antenna structures and communication protocols such as Bluetooth or NFC to communicate out-of-band data between PTX device 12 and PRX device 24. Power may be conveyed wirelessly between coils 32 and 48 concurrently with the out-of-band data transmissions. Wireless transceiver circuitry 20 may wirelessly transmit and/or receive out-of-band signals to and/or from PRX device 24 using an antenna such as antenna 56. Wireless transceiver circuitry 40 may wirelessly transmit and/or receive out-of-band signals to and/or from PTX device 12 using an antenna such as antenna 58.

Antennas 56 and 58 may handle wireless local area network (WLAN) communications bands such as the 2.4 GHz and 5 GHz Wi-Fi® (IEEE 802.11) bands, wireless personal area network (WPAN) communications bands such as the 2.4 GHz Bluetooth® communications band, cellular telephone communications bands such as a cellular low band (LB) (e.g., 600 to 960 MHz), a cellular low-midband (LMB) (e.g., 1400 to 1550 MHz), a cellular midband (MB) (e.g., from 1700 to 2200 MHz), a cellular high band (HB) (e.g., from 2300 to 2700 MHz), a cellular ultrahigh band (UHB) (e.g., from 3300 to 5000 MHz, or other cellular communications bands between about 600 MHz and about 5000 MHz (e.g., 3G bands, 4G LTE bands, 5G New Radio Frequency Range 1 (FR1) bands below 10 GHz, etc.), a near-field communications (NFC) band (e.g., at 13.56 MHz), satellite navigations bands (e.g., an L1 global positioning system (GPS) band at 1575 MHz, an L5 GPS band at 1176 MHz, a Global Navigation Satellite System (GLONASS) band, a BeiDou Navigation Satellite System (BDS) band, etc.), ultra-wideband (UWB) communications band(s) supported by the IEEE 802.15.4 protocol and/or other UWB communications protocols (e.g., a first UWB communications band at 6.5 GHz and/or a second UWB communications band at 8.0 GHz), and/or any other desired communications bands.

Antennas 56 and 58 may support communications in Extremely High Frequency (EHF) or millimeter wave communications bands between about 30 GHz and 300 GHz and/or in centimeter wave communications bands between about 10 GHz and 30 GHz (sometimes referred to as Super High Frequency (SHF) bands). As examples, antennas 56 and 58 may support communications in an IEEE K communications band between about 18 GHz and 27 GHz, a $K_a$ communications band between about 26.5 GHz and 40 GHz, a $K_u$ communications band between about 12 GHz and 18 GHz, a V communications band between about 40 GHz and 75 GHz, a W communications band between about 75 GHz and 110 GHz, or any other desired frequency band between approximately 10 GHz and 300 GHz. If desired, the millimeter/centimeter wave transceiver circuitry may support IEEE 802.11ad communications at 60 GHz (e.g., WiGig or 60 GHz Wi-Fi bands around 57-61 GHz), and/or 5th generation mobile networks or 5th generation wireless systems (5G) New Radio (NR) Frequency Range 2 (FR2) communications bands between about 24 GHz and 90 GHz.

Antennas 56 and 58 may include antennas with resonating elements that are formed from loop antenna structures, patch antenna structures, inverted-F antenna structures, slot antenna structures, planar inverted-F antenna structures, helical antenna structures, dipole antenna structures, monopole antenna structures, hybrids of these designs, etc. Different types of antennas may be used for different bands and combinations of bands. For example, one type of antenna may be used in forming a local wireless link and another type of antenna may be used in forming a remote wireless link antenna.

Each one of housing 30 and housing 52 may be formed from plastic, metal, fiber-composite materials such as carbon-fiber materials, wood and other natural materials, glass, other materials, and/or combinations of two or more of these materials.

The example in FIG. 1 of PTX 12 transmitting wireless power and PRX 24 receiving wireless power is merely illustrative. PTX 12 may optionally be capable of receiving wireless power signals using coil(s) 32 and PRX 24 may optionally be capable of transmitting wireless power signals using coil(s) 48. When a device is capable of both transmitting and receiving wireless power signals, the device may include both an inverter and a rectifier.

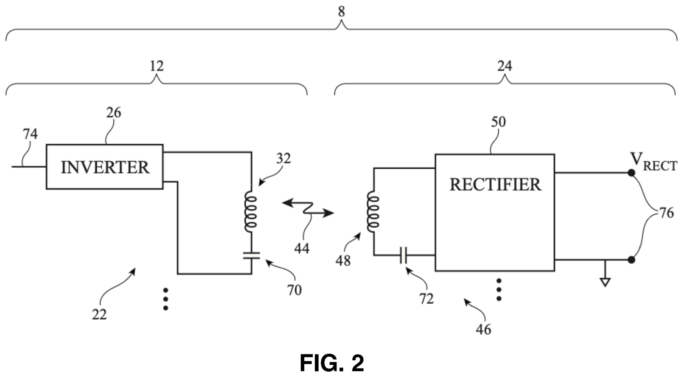

FIG. 2 is a circuit diagram of illustrative wireless charging circuitry for system 8. As shown in FIG. 2, circuitry 22 may include inverter circuitry such as one or more inverters 26 or other drive circuitry that produces wireless power signals that are transmitted through an output circuit that includes one or more coils 32 and capacitors such as capacitor 70. In some embodiments, device 12 may include multiple individually controlled inverters 26, each of which supplies drive signals to a respective coil 32. In other embodiments, an inverter 26 is shared between multiple coils 32 using switching circuitry.

During operation, control signals for inverter(s) 26 are provided by control circuitry 16 at control input(s) 74. A single inverter 26 and single coil 32 is shown in the example of FIG. 2, but multiple inverters 26 and multiple coils 32 may be used, if desired. In a multiple coil configuration, switching circuitry (e.g., multiplexer circuitry) may be used to couple a single inverter 26 to multiple coils 32 and/or each coil 32 may be coupled to a respective inverter 26. During wireless power transmission operations, transistors in one or more selected inverters 26 are driven by AC control signals from control circuitry 16. The relative phase between the inverters may be adjusted dynamically (e.g., a pair of inverters 26 may produce output signals in phase or out of phase).

The application of drive signals using inverter(s) 26 (e.g., transistors or other switches in circuitry 22) causes the output circuits formed from selected coils 32 and capacitors 70 to produce alternating-current electromagnetic fields (signals 44) that are received by wireless power receiving circuitry 46 using a wireless power receiving circuit formed from one or more coils 48 and one or more capacitors 72 in device 24.

Rectifier circuitry 50 is coupled to one or more coils 48 and converts received power from AC to DC and supplies a corresponding direct current output voltage Vrect across rectifier output terminals 76 for powering load circuitry in device 24 (e.g., for charging battery 34, for powering a display and/or other input-output devices 54, and/or for powering other components).

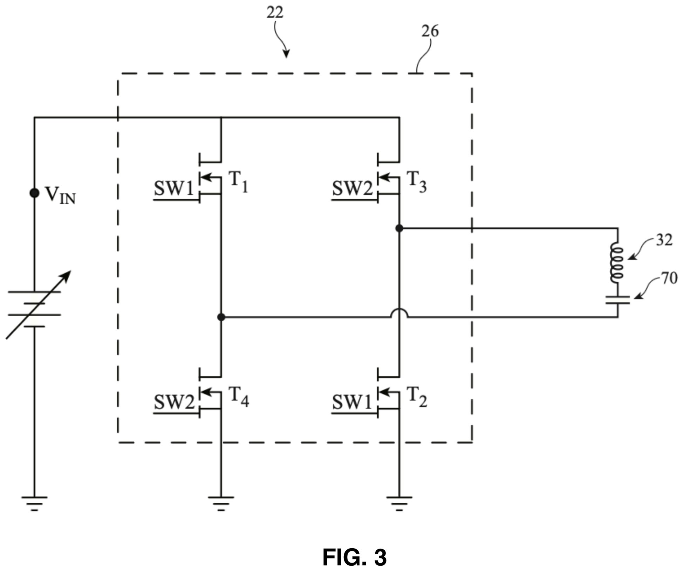

FIG. 3 is a circuit diagram showing an arrangement for inverter 26 in power transmitting circuitry 22. As shown in FIG. 3, inverter 26 may be a full-bridge inverter that includes four switches arranged in a bridge configuration. Switches $T_1$ and $T_4$ are connected in series between a control terminal that provides an adjustable voltage $V_{IN}$ and ground. In parallel to switches $T_1$ and $T_4$, switches $T_3$ and $T_2$ are connected in series between the control terminal that provides adjustable voltage $V_{IN}$ and ground. Coil 32 and capacitor 70 are connected between a first node between $T_1$ and $T_4$ and a second node between $T_2$ and $T_3$. The four switches ($T_1$, $T_2$, $T_3$, and $T_4$) may be power metal-oxide-semiconductor field-effect transistors (MOSFETs), insulated-gate bipolar transistors (IGBTs), or other desired switching components. FIG. 3 shows an example where switches $T_1$, $T_2$, $T_3$, and $T_4$ (sometimes referred to as transistors $T_1$, $T_2$, $T_3$, and $T_4$) are power MOSFETs.

During operation of inverter 26, transistors $T_1$, $T_2$, $T_3$, and $T_4$ may be switched on and off in pairs. In an example where the duty cycle is equal to 50%, one pair of transistors (e.g., transistors $T_1$ and $T_2$) conducts (is turned on) during one half-cycle of the output waveform while the other pair is turned off. Then, during the next half-cycle, the conducting transistors ($T_1$ and $T_2$) are switched off, and the previously turned-off transistors ($T_3$ and $T_4$) are turned on. This process is repeated to generate the desired AC output waveform as input to wireless power transfer coil 32.

FIG. 3 shows an example where transistors $T_1$

and $T_2$ receive a common control signal SW1 and transistors $T_3$ and $T_4$ receive a common control signal SW2. Control signals SW1 and SW2 may be alternatively switched between first and second states (e.g., high and low states) to operate inverter 26.

There are several operating characteristics of inverter 26 that may be adjusted during operation of PTX 12. These operating characteristics include an inverter voltage $V_{IN}$, an operating phase $\theta$, a duty cycle, and a frequency of the output AC current signals generated by inverter 26.

As shown in FIG. 3, inverter 26 may be connected to a variable DC voltage $V_{IN}$. The magnitude of $V_{IN}$ may be adjusted to control a magnitude of wireless power transmitted by power transmission circuitry 22. Increasing $V_{IN}$ causes an increase in the magnitude of wireless power transmitted by power transmission circuitry 22 whereas decreasing $V_{IN}$ causes a decrease in the magnitude of wireless power transmitted by power transmission circuitry 22. Instead or in addition, the magnitude of the operating phase may be used to control the magnitude of wireless power transmitted by power transmission circuitry 22. Instead or in addition, the magnitude of the duty cycle may be used to control the magnitude of wireless power transmitted by power transmission circuitry 22.

The example in FIG. 3 of the inverter output being coupled to a wireless power transfer coil is merely illustrative. In general, an inverter output may be coupled to a wireless power transfer coil (as in FIGS. 2 and 3), a transformer coil, an antenna, or any other desired component.

Some electronic devices with inverters, such as PTX 12 in FIGS. 1-3, may employ signal dithering to improve electromagnetic emission characteristics of the system (e.g., to reduce conducted emission and/or radiated emission). For example, PTX 12 may dither the clock signal that is used to control inverter 26. This effectively dithers the frequency of the alternating current signals output by inverter 26.

Herein, various signals (e.g., clock signals) may be referred to as having corresponding waveforms (e.g., the shape of the voltage of the signal over time). A given waveform may have a recurring shape that repeats at a given frequency (i.e., the given waveform may be periodic). The recurring shape need not necessarily be a regular shape (e.g., a sinusoid). Indeed, the recurring shape may deviate from a sinusoidal shape. However, this type of waveform may still have a frequency associated with the periodic repeating of the non-sinusoidal shape.

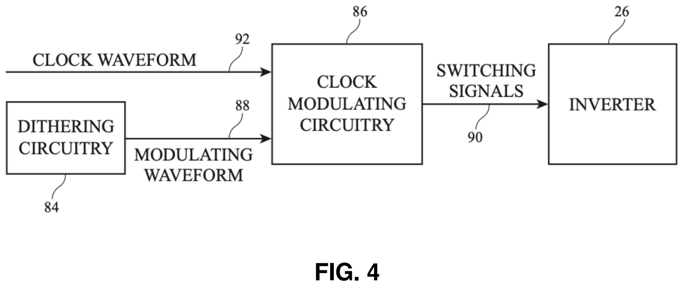

FIG. 4 is a diagram of an illustrative PTX 12 with dithering circuitry. In one possible arrangement, dithering circuitry 84 and clock modulating circuitry 86 may be used to implement a spread spectrum clocking technique (sometimes referred to as clock dithering). Dithering circuitry 84 and clock modulating circuitry 86 may be considered part of control circuitry 16. In spread spectrum clocking, a clock waveform is intentionally modified such that the signal's spectrum is spread around the target frequency for the clock signal. This target frequency is sometimes referred to as the fundamental frequency for the clock signal. This improves the electromagnetic compatibility (EMC) associated with the target frequency of the clock signal. Dithering circuitry 84 may determine a modulating waveform 88 that is used to modulate the clock waveform 92 (sometimes referred to as native clock waveform 92, initial clock waveform 92, undithered clock waveform 92, system clock 92, etc.). To improve EMC, modulating waveform 88 is applied to clock waveform 92 by clock modulating circuitry 86. Clock modulating circuitry 86 may use modulating waveform 88 to frequency modulate clock waveform 92. The resulting switching signals 90 (sometimes referred to as modified clock signal 90, dithered clock signal 90, dithered switching signals 90, etc.) are then provided to inverter 26 to create frequency dithered AC signals.

The modulating waveform 88 output by dithering circuitry 84 may be fixed or may be adjusted based on real time operating conditions of wireless power system 8. For example, dithering circuitry 84 may generate modulating waveform 88 based on a state of charge of battery 34 in PRX 24, an output voltage and/or current of rectifier 50, an output voltage and/or current of coil 48, a voltage and/or current of coil 32, etc.

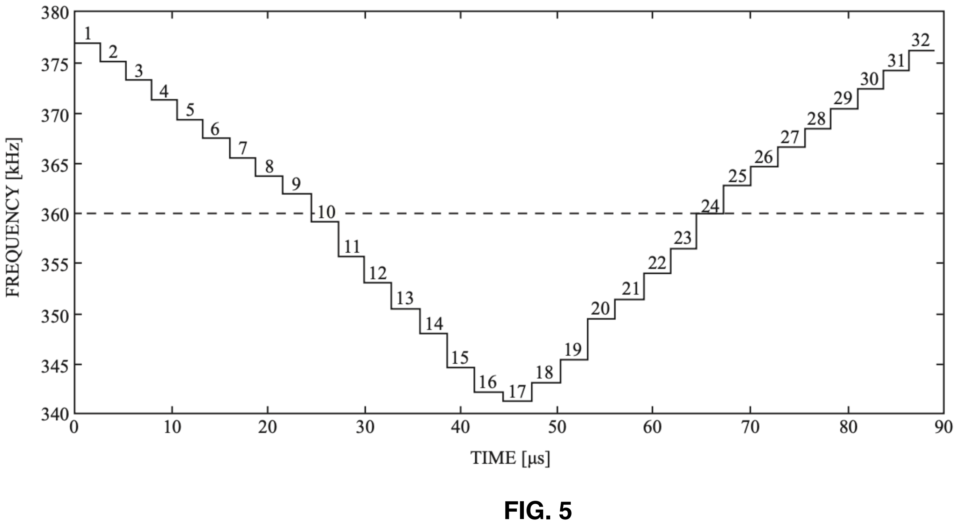

FIG. 5 is a graph of an example dithered clock signal that may be provided to inverter 26 in PTX 12. The dithered clock signal of FIG. 5 may be used for a PTX with a designated wireless power transmission frequency (sometimes referred to as the nominal wireless power transmission frequency or simply the wireless power transmission frequency) of 360 kHz. As shown in FIG. 5, the dithered clock signal may be a stepwise function that approximates a triangular waveform. The dithered clock signal may therefore be referred to as having a triangular shape. The dithered clock signal of FIG. 5 may be repeated in a plurality of repeated cycles. Each repeated cycle may include one period of the waveform shown in FIG. 5. The triangular waveform desirably has a smooth transition between each repeating cycle of the dither pattern.

There are a total of 32 frequency steps in one repeated cycle of the dithered clock signal. FIG. 5 shows the instantaneous frequency of the clock signal over time. The period of each frequency step is equal to $1/f_s$ (where $f_s$ is the instantaneous frequency of the clock signal). In other words, the dithered clock signal remains at each frequency step for exactly one period at the instantaneous frequency associated with that frequency step.

Each one of the 32 frequency steps may have a unique frequency magnitude. The 32 unique frequency steps have a first subset of falling steps (sometimes referred to as decreasing steps) where the frequency magnitude decreases with each subsequent step of the waveform. The 32 unique frequency steps have a second subset of rising steps (sometimes referred to as increasing steps) where the frequency magnitude increases with each subsequent step of the waveform. In the example of FIG. 5, steps 1-17 are the falling steps of the waveform and steps 18-32 are the rising steps of the waveform. The middle step of the rising steps (i.e., step 24) is equal to the wireless power transmission frequency of 360 kHz. The middle step of the falling steps (i.e., step 9) is close to the wireless power transmission frequency of 360 kHz (though not exactly equal to 360 kHz each frequency step has a unique frequency magnitude).

Each one of the rising frequency steps may be shifted relative to a corresponding frequency step of the falling frequency steps. The frequency magnitude at step 18 is slightly greater than the frequency magnitude at step 16, the frequency magnitude at step 19 is slightly greater than the frequency magnitude at step 15, the frequency magnitude at step 20 is slightly greater than the frequency magnitude at step 14, etc.

The frequency magnitude at each one of the rising frequency steps may be between a respective two of the frequency magnitudes of the falling frequency steps. The frequency magnitude at step 18 is between the frequency magnitudes of steps 15 and 16, the frequency magnitude at step 19 is between the frequency magnitudes of steps 14 and 15, the frequency magnitude at step 20 is between the frequency magnitudes of steps 13 and 14, etc.

The modulation frequency ($f_m$) of the dithered clock signal may be equal to the inverse of the period of the waveform of FIG. 5. Because each frequency step has a duration of one period at the instantaneous frequency at that frequency step and the dithered clock signal is centered around the designated wireless power transmission frequency, the modulation frequency of the dithered clock signal may also be equal to the wireless power transmission frequency divided by the number of steps in the frequency profile. The modulation frequency of the dithered clock signal of FIG. 5 is therefore 11.25 kHz (e.g., 360 kHz / 32 = 11.25 kHz).

The dithered clock signal of FIG. 5 may also have a characteristic frequency deviation $\Delta f$. The magnitude of $\Delta f$ may be equal to the maximum difference between a frequency magnitude of the dithered clocks signal and the wireless power transmission frequency. In the waveform of FIG. 5, frequency step 1 has the maximum frequency and frequency step 17 has the minimum frequency. Frequency step 17 may have the greatest deviation from the wireless power transmission frequency and therefore the magnitude of $\Delta f$ is equal to 360 kHz minus the frequency at step 17. Herein the frequency at step 17 may be equal to 341.23 kHz and $\Delta f$ therefore is equal to 18.77 kHz.

The dithered clock signal of FIG. 5 may have a characteristic modulation index (h) that is defined as $\Delta f/f_m$. For the waveform of FIG. 5, the modulation index is equal to 1.67 (e.g., 18.77 kHz / 11.25 kHz = 1.67).

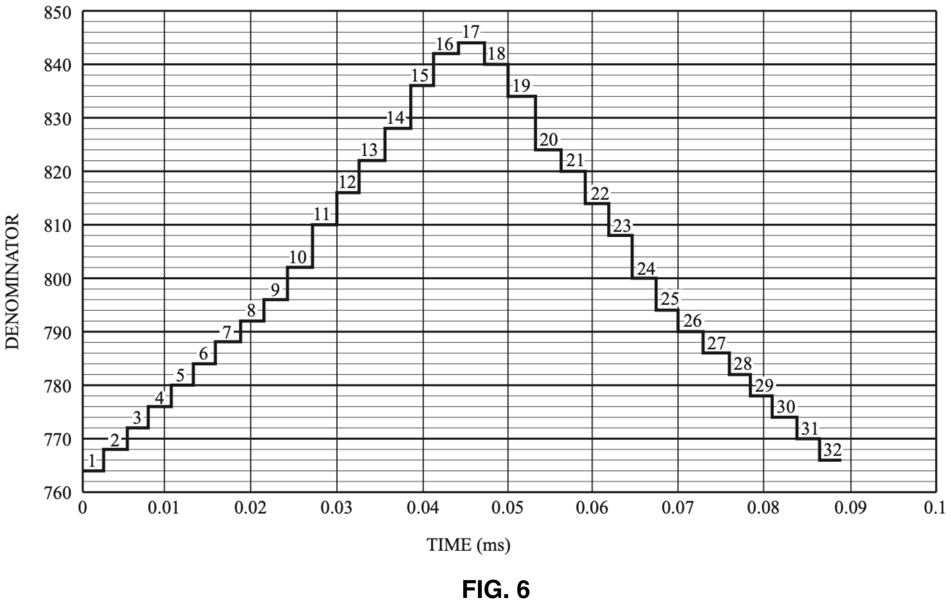

FIG. 6 shows an example modulating waveform that may be used to generate the dithered clock signal of FIG. 5. As one example, clock modulating circuitry 86 may modulate clock waveform 92 by dividing the clock frequency by a denominator that is provided by modulating waveform 88. As one example, the system clock frequency may be 288 MHz. The denominator used to divide the system clock frequency is shown in FIG. 6. The waveform of FIG. 6 has 32 steps, with each step corresponding to a respective step in the dithered clock signal of FIG. 5.

As a specific example, the modulating waveform of FIG. 6 may have denominator values of 764, 768, 772, 776, 780, 784, 788, 792, 796, 802, 810, 816, 822, 828, 836, 842, 844, 840, 834, 824, 820, 814, 808, 800, 794, 790, 786, 782, 778, 774, 770, and 766 (in that order). The resulting frequency magnitudes are equal to 376.96 kHz (e.g., 288 MHz/764 = 376.96 kHz), 375.00 kHz (e.g., 288 MHz/768 = 375.00 kHz), 373.06 kHz, 371.13 kHz, 369.23 kHz, 367.35 kHz, 365.48 kHz, 363.64 kHz, 361.81 kHz, 359.10 kHz, 355.56 kHz, 352.94 kHz, 350.36 kHz, 347.83 kHz, 344.50 kHz, 342.04 kHz, 341.23 kHz, 342.86 kHz, 345.32 kHz, 349.51 kHz, 351.22 kHz, 353.81 kHz, 356.44 kHz, 360 kHz, 362.72 kHz, 364.56 kHz, 366.41 kHz, 368.29 kHz, 370.18 kHz, 372.09 kHz, 374.03 kHz, and 375.98 kHz (in that order). For every pair of adjacent frequency steps, the difference between frequency magnitudes may be between 0.5 kHz and 4.5 kHz. The minimum difference between frequency magnitudes of adjacent frequency steps may be 0.81 kHz. The maximum difference between frequency magnitudes of adjacent frequency steps may be 4.19 kHz.

Each one of the 32 unique denominator steps of FIG. 6 may have a unique magnitude. The 32 unique denominator steps have a first subset of rising steps (sometimes referred to as increasing steps) where the denominator magnitude increases with each subsequent step of the waveform. The 32 unique denominator steps have a second subset of falling steps (sometimes referred to as decreasing steps) where the denominator magnitude decreases with each subsequent step of the waveform. In the example of FIG. 6, steps 1-17 are the rising steps of the waveform and steps 18-32 are the falling steps of the waveform.

One or more of the falling denominator steps may be shifted by a constant amount relative to a corresponding denominator step of the rising frequency steps. The magnitude of the shift in FIG. 6 is equal to 2. The denominator magnitude at step 18 is 2 less than the denominator magnitude at step 16, the denominator magnitude at step 19 is 2 less than the denominator magnitude at step 15, the denominator magnitude at step 21 is 2 less than the denominator magnitude at step 13, etc.

The specific examples of FIGS. 5 and 6 are merely illustrative. The modulating frequency $f_m$ may be greater than 9 kHz, greater than 10 kHz, greater than 11 kHz, greater than 15 kHz, less than 30 kHz, less than 20 kHz, etc. A lower modulating frequency may be desirable for mitigating the magnitude of $\Delta f$, which is less

stressful to the wireless power system. It may also be desirable for the modulating frequency $f_m$ to be greater than 9 kHz because 9 kHz is a resolution bandwidth (RBW) used during some electromagnetic interference (EMI) testing protocols.

The magnitude of the modulation index (h) for the dithered clock signal may be less than 2.0, less than 1.9, less than 1.8, less than 1.7, less than 1.6, greater than 1.4, greater than 1.5, greater than 1.6, between 1.4 and 1.8, between 1.5 and 1.7, between 1.6 and 1.7, etc. The magnitude of the frequency deviation ($\Delta f$) for the dithered clock signal may be greater than 5 kHz, greater than 10 kHz, greater than 15 kHz, greater than 20 kHz, greater than 30 kHz, less than 20 kHz, less than 15 kHz, between 10 kHz and 30 kHz, between 10 kHz and 20 kHz, etc. The magnitude of the frequency deviation ($\Delta f$) for the dithered clock signal may be less than 20% the wireless power transmission frequency, less than 10% the wireless power transmission frequency, less than 5% the wireless power transmission frequency, less than 3% the wireless power transmission frequency, greater than 1% the wireless power transmission frequency, greater than 2% the wireless power transmission frequency, greater than 5% the wireless power transmission frequency, greater than 10% the wireless power transmission frequency, between 1% and 10% of the wireless power transmission frequency, etc.

The dithered clock signal of FIG. 5 may have a time-weighted average frequency that is within 1 kHz of the wireless power transmission frequency (e.g., between 359 kHz and 361 kHz, between 127 kHz and 129 kHz, etc.).

One goal of the frequency dithering scheme herein is to improve EMC at the designated wireless power transmission frequency. In general, greater mitigation in EMI at the designated wireless power transmission frequency is desirable. However, the maximum emission peak associated with the dithered clock signal needs to remain at the wireless power transmission frequency, and not a sideband frequency. In other words, it is desirable for the emission peaks at the sideband frequencies associated with the wireless power transmission frequency to be less than the emission peak at the wireless power transmission frequency. Mitigating the emission peak at the wireless power transmission frequency may cause the emission peaks at the sideband frequencies to increase. The dithering pattern herein may therefore be selected to mitigate the emission peak at the wireless power transmission frequency as much as possible while also ensuring that the emission peaks at the sideband frequencies are less than the emission peak at the wireless power transmission frequency.

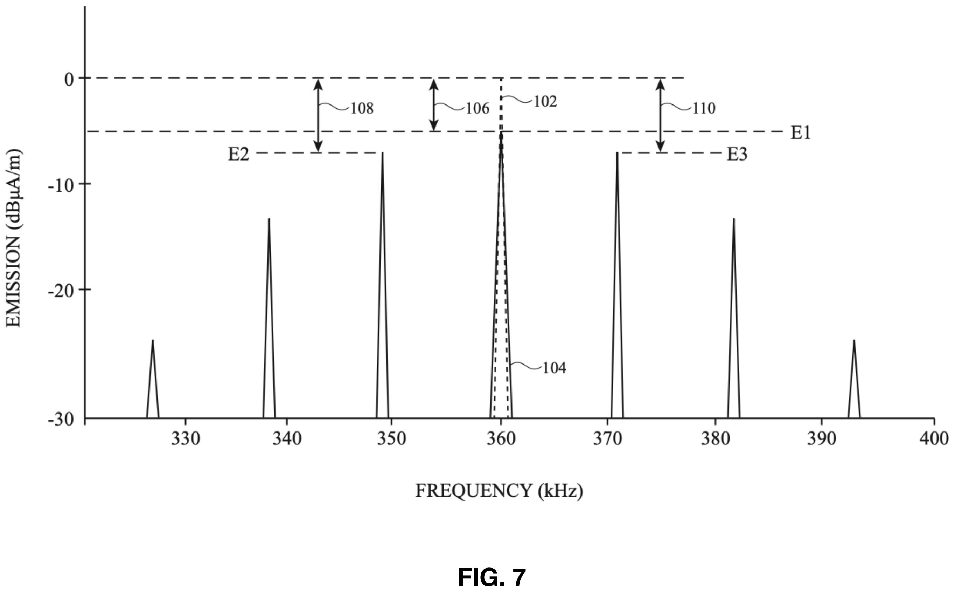

FIG. 7 is a graph of an emission spectrum associated with the dithered clock signal of FIG. 5. The graph shows emission (in units of dB$\mu$A/m) as a function of frequency. Differences in emission may have units of dB. The dashed profile 102 shows the emission of an undithered version of the clock signal at the wireless power transmission frequency. For the example of FIGS. 5-7, profile 102 shows the emission of an undithered clock signal at a constant frequency of 360 kHz. The magnitude of profile 102 at 360 kHz may be defined as 0 for the Y-axis scale of FIG. 7.

The solid profile 104 shows the emission of the dithered clock signal of FIG. 5. As shown in FIG. 7, the maximum emission peak for profile 104 has a magnitude E1 and is at the wireless power transmission frequency (e.g., 360 kHz). The emission peak at 360 kHz for profile 104 (e.g., E1) is less than the emission peak for profile 102 at 360 kHz by difference 106. Difference 106 therefore characterizes the EMI reduction at the wireless power transmission frequency. For the dithered clock signal of FIG. 5, the magnitude of difference 106 is -4.8 dB.

Profile 104 has peaks at sideband frequencies in addition to the wireless power transmission frequency. The sideband frequencies may be separated from one another by the modulation frequency of the dithered clock signal. In the example of FIG. 5, the modulation frequency is equal to 11.25 kHz. Therefore, in FIG. 7, each emission peak is separated from the adjacent emission peaks by a frequency of 11.25 kHz.

The emission peaks may become lower with increasing deviation from the wireless power transmission frequency. The dithering pattern of FIG. 5 is selected to ensure that the emission magnitudes at the closest sideband frequencies to the wireless power transmission frequency are less than the emission magnitude at the wireless power transmission frequency. FIG. 7 shows how there is an emission magnitude E2 at a first sideband frequency 348.75 kHz and an emission magnitude E3 at a second sideband frequency 371.25 kHz. The emission magnitude E2 is less than the emission peak for profile 102 by difference 108. The emission magnitude E3 is less than the emission peak for profile 102 by difference 110. For the dithered clock signal of FIG. 5, the magnitude of difference 108 is -5.9 dB and the magnitude of difference 110 is -5.3 dB.

Differences 108 and 110 may be greater than difference 106 to ensure that the peak at the designated wireless power transmission frequency is the maximum emission magnitude for the dithered clock signal. However, differences 108 and 110 may be close to difference 106 to improve the total magnitude of difference 106. Difference 108 may be within 2 dB of difference 106, within 1.5 dB of difference 106, within 1 dB of difference 106, etc. Difference 110 may be within 2 dB of difference 106, within 1.5 dB of difference 106, within 1 dB of difference 106, etc.

The dithering pattern described herein is used for a wireless power transmission frequency of 360 kHz. However, it should be understood that the same concepts may be applied to a dithering pattern regardless of the magnitude of the wireless power transmission frequency. For example, a dithering pattern at any desired wireless power transmission frequency (e.g., 100-400 kHz, 128 kHz, 1-100 MHz, between 1.7 MHz and 1.8 MHz, less than 2 MHz, between 100 kHz and 2 MHz, 6.78 MHz, 13.56 MHz, etc.) may have the number of frequency steps, modulation frequency, waveform shape, frequency deviation, modulation index, and/or emission profile characteristics described herein.

One or more operating characteristics of PTX 12 may vary (in addition to frequency) between different frequency steps in the dithered clock signal of FIG. 5. Different frequency steps may have different associated amplitude, duty cycle, phase, etc. In particular, a non-frequency operating characteristic may be modified to adjust the magnitude of the wireless power transfer from PTX 12 to PRX 24. Adjusting the magnitude (power level) of the wireless power transfer may mitigate ripple that would otherwise be present due to varying gain caused by the changes in frequency.

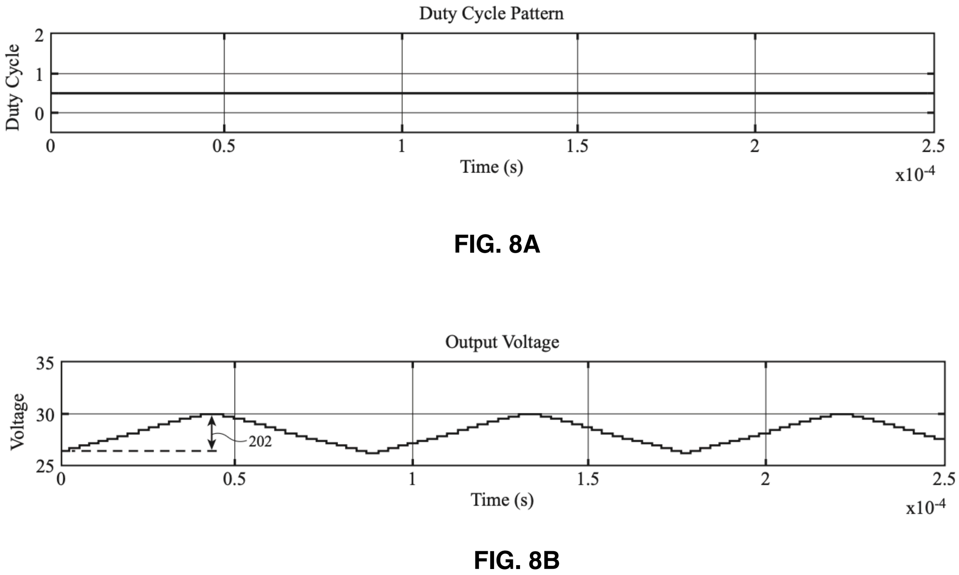

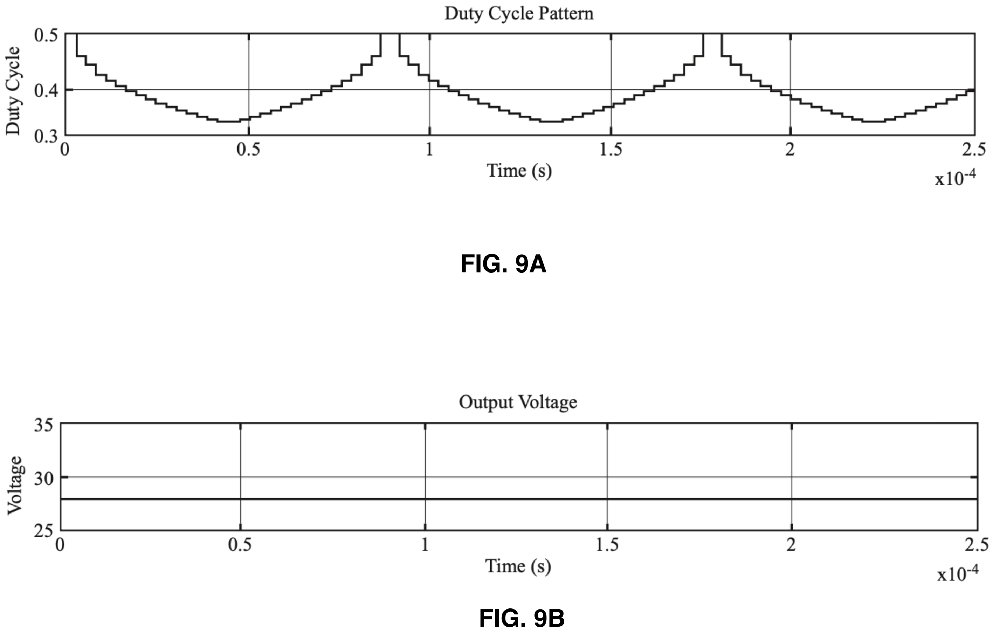

This concept is illustrated in FIGS. 8 and 9. FIG. 8A is a graph of duty cycle over time when PTX 12 operates using a constant duty cycle. As shown in FIG. 8A, the duty cycle remains fixed at a given value (e.g., 0.5 or 50%) over time. However, the changes in frequency of the dithered clock signal (as shown in FIG. 5) may cause changes in the output voltage at PRX 24. FIG. 8B is a graph of the rectifier output voltage (e.g., $V_{RECT}$) of PRX 24 while PTX 12 uses the frequencies of FIG. 5 and the duty cycle of FIG. 8A. As shown in FIG. 8B, when duty cycle (and other non-frequency operating characteristics) is constant, the output voltage is correlated to the instantaneous frequency of the wireless power signals transmitted by PTX 12. Different frequencies may have different associated gain magnitudes in the inductive link between PTX 12 and PRX 24. In the example of wireless power transfer system 8 (FIGS. 1 and 2), operating frequency is inversely related to gain between PTX 12 and PRX 24, and therefore output voltage as seen by PRX 24 given a particular output by PTX 12. In particular, a higher frequency has a lower associated gain and output voltage whereas a lower frequency has a higher associated gain and output voltage.

Using the operating characteristics of FIGS. 5 and 8A, the rectifier output voltage has a ripple (as shown in FIG. 8B). Ripple is defined as a residual periodic variation of a DC voltage. Herein, the magnitude of the ripple may be characterized as the difference between the maximum output voltage and the minimum output voltage over at least one repeating cycle of the dithered clock signal. In FIG. 8B, the maximum output voltage is approximately 30 V and the minimum output voltage is approximately 26 V. The magnitude of ripple 202 is therefore approximately 4 V.

To improve the wireless charging operations between PTX 12 and PRX 24 (e.g., mitigate noise and vibrations, improve stability and communications, etc.), PTX 12 may mitigate ripple caused by the dithered clock signal. In particular, PTX 12 may vary one or more non-frequency operating characteristics (e.g., amplitude, duty cycle, phase, etc.) between different frequency steps within the repeated cycle. Varying the non-frequency operating characteristic may change the transmitted power level associated with the wireless power transfer from PTX 12 to PRX 24, thus compensating for the change in gain caused by the varying frequency between the different frequency steps. In particular, the non-frequency operating characteristic may be controlled to cancel out any changes in gain caused by changes in frequency. In other words, the non-frequency operating characteristic has an associated high transmitted power level when the frequency is high (and the gain is low) and an associated low transmitted power level when the frequency is low (and the gain is high).

FIG. 9A is a graph of duty cycle over time when PTX 12 operates using a variable duty cycle to mitigate ripple. As shown in FIG. 9A, the duty cycle varies over time according to a pattern that is similar to the frequency pattern of FIG. 5. There may be a unique duty cycle for each one of the 32 frequency steps of FIG. 5 or for some but not all of the 32 frequency steps of FIG. 5.

FIG. 9B is a graph of the rectifier output voltage (e.g., $V_{RECT}$) of PRX 24 while PTX 12 uses the frequencies of FIG. 5 and the duty cycle of FIG. 9A. As shown in FIG. 9B, the varying duty cycle of FIG. 9A causes the output voltage to be constant (or approximately constant). The ripple of FIG. 9B is therefore equal to 0 (or approximately 0 such as less than 0.5 V, less than 0.3 V, less than 0.1 V, etc.).

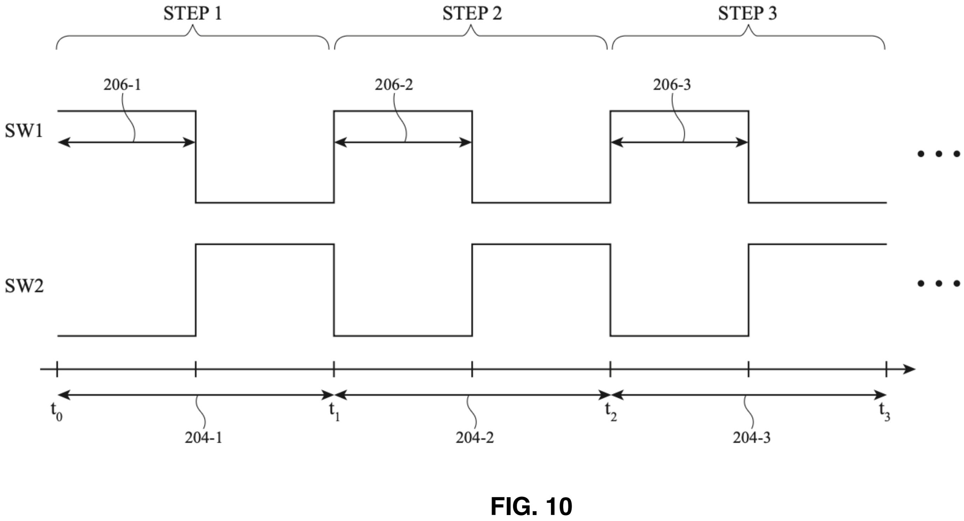

FIG. 10 is a graph showing how the duty cycle of inverter 26 may be varied at each frequency step. FIG. 10 shows the switching signals used for steps 1, 2, and 3 of the dithered clock signal of FIG. 10. As shown in FIG. 10, step 1 has a corresponding period 204-1, step 2 has a corresponding period 204-2, and step 3 has a corresponding period 204-3. The instantaneous frequency at step 1 is 376.96 kHz and step 1 therefore has a period 204-1 of 2.65 $\mu$s. The instantaneous frequency at step 2 is 375.00 kHz and step 2 therefore has a period 204-2 of 2.67 $\mu$s. The instantaneous frequency at step 3 is 373.06 kHz and step 3 therefore has a duration of 2.68 $\mu$s.

In addition to a unique period, each frequency step may also have a unique duty cycle. The duty cycle may be defined as the percentage of time control signal SW1 is high (thus causing transistors T1 and T2 from FIG. 3 to conduct or be turned on). As shown in FIG. 10, during period 204-1 between $t_0$ and $t_1$, SW1 is high for a duration 206-1 (e.g., a subset of the period). SW1 is then low for the remainder of the period. The duty cycle during step 1 is therefore equal to the duration of 206-1 divided by the duration 204-1. Similarly, the duty cycle during step 2 is therefore equal to the duration of 206-2 divided by the duration 204-2 and the duty cycle during step 3 is therefore equal to the duration of 206-3 divided by the duration 204-3. The duty cycle of step 1 may be 50%, the duty cycle of step 2 (e.g., 49%) may be less than the duty cycle of step 1, and the duty cycle of step 3 (e.g., 48%) may be less than the duty cycle of step 2.

FIG. 10 shows an example of complementary duty cycle control where SW2 is set to be equal to the inverse of SW1. In other words, SW2 is low when SW1 is high and vice versa. This example is merely illustrative and SW1 and SW2 may instead be controlled using symmetrical duty cycle control (sometimes referred to as parallel duty cycle control). In symmetrical duty cycle control, SW1 and SW2 are high for the same amount of time in each period. There may therefore be one or more times in a period where both SW1 and SW2 are low. In an example where the duty cycle is 45% and symmetrical duty cycle control is used, SW1 may be high and SW2 may be low for the first 45% of the period, SW1 and SW2 are both low for the next 5% of the period, SW2 may be high and SW1 may be low for the next 45% of the period, and both SW1 and SW2 may be low for the last 5% of the period.

A duty cycle of 50% may maximize the transmitted power level of the wireless power transfer at a given frequency. Lowering the duty cycle may lower the transmitted power level of the wireless power transfer at a given frequency. The duty cycle is therefore at 50% for at least the frequency step that has a maximum frequency for the frequency dither pattern. The duty cycle may have a minimum magnitude for at least the frequency step that has a minimum frequency for the frequency dither pattern. The minimum duty cycle may be less than 45%, less than 40%, less than 35%, less than 30%, etc. The range of duty cycles used during the repeated cycle of the dithered clock signal may be at least 5%, at least 10%, at least 15%, at least 20%, at least 25%, between 10% and 30%, etc. When a 32-step dither pattern is used (as in FIG. 5), the 32 frequency steps may have at least 10 unique duty cycle magnitudes, at least 15 unique duty cycle magnitudes, at least 20 unique duty cycle magnitudes, at least 25 unique duty cycle magnitudes, at least 30 unique duty cycle magnitudes, 32 unique duty cycle magnitudes, etc.

The example of varying duty cycle magnitude between different frequency steps of the dithered clock signal to mitigate ripple is merely illustrative. In another possible arrangement, control circuitry 16 may vary the phase of control signals SW1 and SW2 to mitigate ripple.

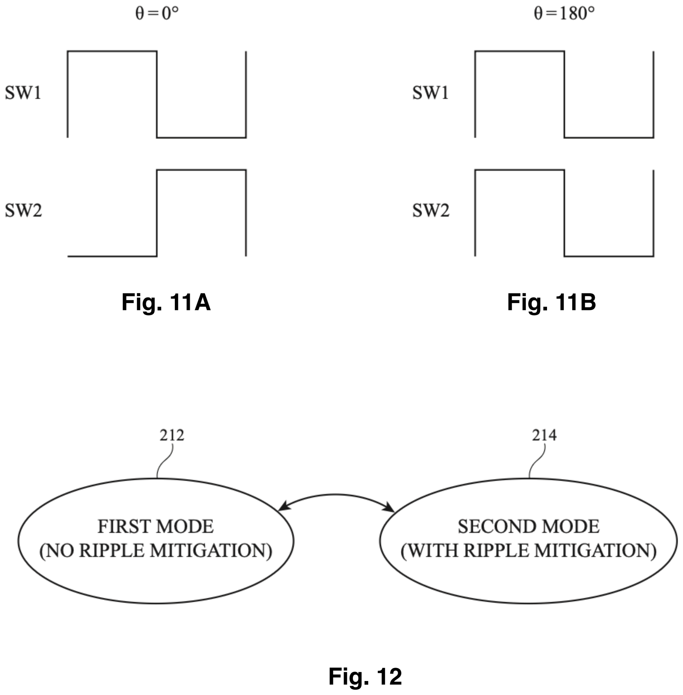

The operating phase $\theta$ (sometimes referred to as inverter phase $\theta$) may refer to the offset between control signals SW1 and SW2. FIG. 11A shows a timing diagram for SW1 and SW2 when the inverter phase is equal to 0 degrees. FIG. 11B shows a timing diagram for SW1 and SW2 when the inverter phase is equal to 180 degrees. Using the convention of FIGS. 11A and 11B, an operating phase of 0 (zero) degrees is defined as the condition during which SW2 is the inverse of SW1 and an operating phase of 180 degrees is defined as the condition during which SW2 is the same as SW1. At an operating phase of 0 degrees SW2 changes from low to high when SW1 changes from high to low and SW2 changes from high to low when SW1 changes from low to high. In other words, the waveforms of SW1 and SW2 are offset by half a period when the operating phase is 0 degrees. At an operating phase of 180 degrees SW2 changes from low to high when SW1 changes from low to high and SW2 changes from high to low when SW1 changes from high to low. In other words, the waveforms of SW1 and SW2 are synchronous when the operating phase is 180 degrees.

With the definition of operating phase $\theta$ in FIGS. 11A and 11B, the effective output voltage of the inverter is maximized when the phase is equal to 0 degrees (as shown in FIG. 11A) and minimized when the phase is equal to 180 degrees (as shown in FIG. 11B). Adjusting the phase of inverter 26 may therefore adjust a magnitude of wireless power transmitted by power transmission circuitry 22. Between 0 degrees and 180 degrees, increasing the phase causes a decrease in the magnitude of wireless power transmitted by power transmission circuitry and decreasing the phase causes an increase in the magnitude of wireless power transmitted by power transmission circuitry 22.

The phase may therefore be 0 degrees for at least the frequency step that has a maximum frequency for the frequency dither pattern. The phase may have a maximum magnitude for at least the frequency step that has a minimum frequency for the frequency dither pattern. The maximum phase may be greater than 5 degrees, greater than 10 degrees, greater than 20 degrees, greater than 30 degrees, greater than 50 degrees, etc. The range of phases used during the repeated cycle of the dithered clock signal may be greater than 5 degrees, greater than 10 degrees, greater than 20 degrees, greater than 30 degrees, greater than 50 degrees, etc. When a 32-step dither pattern is used (as in FIG. 5), the 32 frequency steps may have at least 10 unique phase magnitudes, at least 15 unique phase magnitudes, at least 20 unique phase magnitudes, at least 25 unique phase magnitudes, at least 30 unique phase magnitudes, 32 unique phase magnitudes, etc.

In some operating conditions, the wireless power transfer performance may be satisfactory without ripple mitigation operations. The power transmitting circuitry 22 may therefore be operable in two modes, one with ripple mitigation and one without ripple mitigation.

FIG. 12 is a state diagram of illustrative power transmitting circuitry with multiple operating modes. As shown in FIG. 12, the power transmitting circuitry may be operable in a first mode 212 and a second mode 214. In the first mode, no ripple mitigation is performed by control circuitry 16 and/or power transmitting circuitry 22. The phase and duty cycle may therefore be fixed while power transmitting circuitry 12 operates in mode 212 (sometimes referred to as non-ripple-mitigation mode 212). In the second mode, ripple mitigation is performed by control circuitry 16 and/or power transmitting circuitry 22. While power transmitting circuitry 12 operates in mode 214 (sometimes referred to as ripple-mitigation mode 214), the phase and/or duty cycle may vary within each repeated cycle of the dithered clock signal.

The phase and duty cycle may both be referred to as timing properties of the switching signals used to control inverter 26. The phase and duty cycle may both be referred to as non-frequency operating conditions of power transmitting circuitry 22.

Control circuitry 16 may place power transmitting circuitry 22 in mode 212 or mode 214 based on one or more factors. In particular, control circuitry 16 may select an appropriate mode for power transmitting circuitry 22 based on one or more real time operating conditions such as inverter power level ($P_{INV}$), an estimated inductive coupling factor ($k_{EST}$) between PTX 12 and PRX 24, and/or ripple magnitude information reported from PRX 24 to PTX 12.

Inverter power level $P_{INV}$ may refer to the power level of AC signals generated by inverter 26 and provided to transmitting (TX) coil 32. At some inverter power levels, the wireless power transfer performance may be satisfactory without ripple mitigation operations and therefore the power transmitting circuitry 22 may operate in mode 212. There may be a threshold for $P_{INV}$ that control circuitry 16 uses to determine the appropriate mode for power transmitting circuitry 22. When $P_{INV}$ is below the threshold, control circuitry 16 places the power transmitting circuitry in mode 212 (without ripple mitigation). When $P_{INV}$ is above the threshold, control circuitry 16 places the power transmitting circuitry in mode 214 (with ripple mitigation). The magnitude of the threshold may be 7 W, 10 W, 15 W, 20 W, 25 W, less than 15 W, less than 12 W, less than 10 W, greater than 8 W, greater than 10 W, greater than 12 W, greater than 15 W, etc.

The example of comparing inverter power level $P_{INV}$ to the threshold to determine the mode for power transmitting circuitry 22 is merely illustrative. Other power levels associated with PTX 12 (e.g., a DC power output from a power adapter connected to PTX 12, a DC power output from a boot portion of a cable that is connected to a power adapter, etc.) may instead be compared to the threshold to determine the mode for power transmitting circuitry 22 if desired.

PTX 12 may estimate the magnitude of the inductive coupling factor (k) between PTX 12 and PRX 24. The inductive coupling factor k is equal to $\frac{M'}{\sqrt{L'_{TX}L'_{RX}}}$ , where M' is the mutual inductance, $L'_{TX}$ is the inductance of coil 32, and $L'_{RX}$ is the inductance of coil 48. To estimate k, PRX 24 may measure the rectifier output voltage ($V_{RECT}$) during a digital ping (e.g., a low-level transfer of wireless power from PTX 12 to PRX 24 at the beginning of the configuration phase and upon detection of PRX 24 on PTX 12). The rectifier output voltage during the digital ping may sometimes be referred to as a digital ping voltage. The digital ping voltage may be measured by PRX 24 and reported to PTX 12 (e.g., using in-band communication or out-of-band communication). PRX 24 may also transmit one or more additional coefficients (e.g., scaling coefficients) or parameters to PTX 12 to assist PTX 12 in the estimation of the inductive coupling factor. PTX 12 may use the received information to estimate the magnitude of k (e.g., $kest = E_0 * p + E_1$, where kest is the estimated magnitude of k, $p = \frac{V_{RECT}}{VCTX\_PP + V_{IN}}$ , $V_{RECT}$ is the digital ping voltage, $V_{IN}$ is the input voltage for inverter 26, VCTX_PP is the measured peak to peak voltage across tuning capacitor 70, and $E_0$ and $E_1$ are selected to fit the k-estimation formula over a preferential range from 0.7 to 0.9). The aforementioned example for k-estimation is merely illustrative and other k-estimation techniques may be used if desired.

At some inductive coupling factor magnitudes, the wireless power transfer performance may be satisfactory without ripple mitigation operations and therefore the power transmitting circuitry 22 may operate in mode 212. There may be a threshold for $k_{EST}$ that control circuitry 16 uses to determine the appropriate mode for power transmitting circuitry 22. When $k_{EST}$ is above the threshold, control circuitry 16 places the power transmitting circuitry in mode 212 (without ripple mitigation). When $k_{EST}$ is below the threshold, control circuitry 16 places the power transmitting circuitry in mode 214 (with ripple mitigation). The magnitude of the threshold may be 0.7, 0.75, 0.8, 0.85, greater than 0.7, greater than 0.75, greater than 0.8, greater than 0.85, less than 0.85, less than 0.8, less than 0.75, less than 0.7, etc.

PRX 24 may report ripple magnitude information to PTX 12 using in-band communication and/or out-of-band communication. The ripple magnitude information may include a ripple magnitude such as the magnitude 202 from FIG. 8B. In general, the ripple magnitude may include any desired information associated with the ripple of output voltage $V_{RECT}$.

One or more of the aforementioned factors may be used by control circuitry 16 to place power transmitting circuitry 22 in mode 212 or mode 214. Control circuitry 16 may place power transmitting circuitry 22 in mode 212 or mode 214 at the beginning of a power transfer operation. Control circuitry 16 may optionally switch between mode 212 and mode 214 during an ongoing power transfer operation.

To determine the magnitudes of duty cycle or phase for each frequency step in the dithering pattern to mitigate ripple, the system gain may be measured at each frequency step for a given set of operating conditions (e.g., $V_{IN}$, $P_{INV}$, etc.). The measured gain may then be used to calculate a duty cycle or phase for each one of the frequency steps. For example, the duty cycle for a given frequency step may be calculated using the formula $DC = \frac{1}{\pi}\sin^{-1}\left(\frac{V_{RECT}}{|G(j\omega)| \cdot V_{IN}}\right)$ , where $DC$ is the duty cycle, $V_{RECT}$ is the rectifier output voltage, $G(j\omega)$ is the wireless link gain, and $V_{IN}$ is the inverter input voltage. This procedure may be performed during a design phase for PTX 12. The procedure may be repeated at various operating conditions to determine patterns of duty cycles to mitigate ripple for a given clock signal dithering pattern at the various operating conditions.

The patterns of varying duty cycle magnitudes or varying phase magnitudes associated with the different operating conditions may be stored in control circuitry 16. During real time operation of PTX 12, PTX 12 may use a lookup table to select the duty cycle pattern or phase pattern that is based on the operating conditions closest to the real time operating conditions.

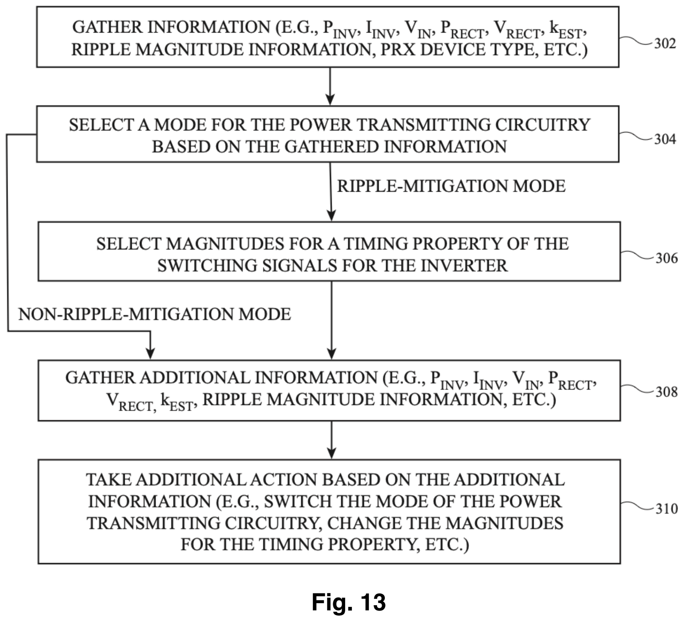

FIG. 13 is a flowchart showing an illustrative method of operating a power transmitting device. During the operations of block 302, control circuitry 16 may gather information. The gathered information may include real time measurements associated with power transmitting circuitry 22 (e.g., $P_{INV}$, $V_{IN}$). The real time measurements may be determined using voltage sensors and/or current sensors within power transmitting circuitry 22. The gathered information may also include or be based on information received from PRX 24. For example, control circuitry 16 may receive information regarding received power (sometimes referred to as received power information or RP information) from PRX 24 such as $P_{RECT}$ and/or $V_{RECT}$. Instead or in addition, control circuitry 16 may receive ripple magnitude information and/or device type information from PRX 24. The information received from PRX 24 may be received using in-band communication and/or out-of-band communication. Control circuitry 16 may use the received information from PRX 24 to estimate and/or derive additional parameters such as inductive coupling factor $k_{EST}$.

During the operations of block 304, control circuitry 16 may select a mode for power transmitting circuitry 22 based on the gathered information from 304. Control circuitry 16 may select either mode 212 or mode 214 from FIG. 12. Control circuitry 16 may select the mode for power transmitting circuitry 22 based on comparing $P_{INV}$ to a threshold, comparing $k_{EST}$ to a threshold, and/or comparing a ripple magnitude to a threshold. As examples, control circuitry 16 may select ripple-mitigation mode 214 for power transmitting circuitry 22 when $P_{INV}$ is greater than a threshold, when $k_{EST}$ is less than a threshold, and/or when the ripple magnitude is greater than a threshold.

As another example, control circuitry 16 may select the mode at block 304 based on a communications protocol used for communication between PTX 12 and PRX 24. A first communication protocol may not support communication regarding ripple magnitude and/or may have a maximum power level at which wireless power transfer operations are satisfactory without ripple mitigation operations. A second communication protocol may support communication regarding ripple magnitude and/or may have a maximum power level at which wireless power transfer operations are improved by ripple mitigation operations. In this example, control circuitry 16 may place the power transmitting circuitry in the non-ripple-mitigation mode 212 when using the first protocol and may place the power transmitting circuitry in the ripple-mitigation mode 214 when using the second protocol.

When control circuitry 16 selects the ripple-mitigation mode during the operations of block 304, the control circuitry may then select magnitudes for a timing property of the switching signals for the inverter during the operations of block 306. The timing property may be duty cycle or phase, as previously discussed. The control circuitry may optionally select which timing property is varied (e.g., duty cycle or phase) during the operations of block 306. The control circuitry may select the magnitudes for the selected timing property based on the gathered information from block 302.

To select the magnitudes for the selected timing property, control circuitry 16 may use a lookup table. The lookup table may include a plurality of patterns for a variety of operating conditions. Each pattern includes a plurality of magnitudes for the timing property. Each magnitude may be associated with a respective frequency step of the dithered clock signal.

The operating conditions associated with each stored pattern may include a device type of PRX 24, an inverter current ($I_{INV}$), received power information such as $V_{RECT}$ or $P_{RECT}$, $k_{EST}$, and/or the ripple magnitude. Control circuitry 16 may select the pattern with associated operating conditions that best match the real time operating conditions. Interpolation and/or extrapolation may optionally be used to accommodate differences between the operating conditions of the selected pattern and the real time operating conditions. The magnitudes of a given pattern may optionally be scaled based on the device type of PRX 24.

After the operations of block 306, PTX 12 may transmit wireless power to PRX 24 using a frequency dithering pattern with an associated varying non-frequency characteristic. The magnitudes of the varying non-frequency characteristic are selected during the operations of block 306. During ongoing wireless power transfer operations, during the operations of block 308, control circuitry 16 may gather additional information (similar to as in the operations of block 302). Said another way, control circuitry 16 may continuously monitor the operating conditions associated with the wireless power transfer.

During the operations of block 310, control circuitry may take additional action based on the additional information from block 308. For example, control circuitry 16 may switch the mode of the power transmitting circuitry. As specific examples, control circuitry 16 may switch from non-ripple-mitigation mode 212 to ripple-mitigation mode 214 in response to $P_{INV}$ increasing to a magnitude that is greater than a threshold or may switch from ripple-mitigation mode 214 to non-ripple-mitigation mode 212 in response to $P_{INV}$ decreasing to a magnitude that is less than the threshold. As additional examples, control circuitry 16 may switch from non-ripple-mitigation mode 212 to ripple-mitigation mode 214 in response to $k_{EST}$ decreasing to a magnitude that is less than a threshold or may switch from ripple-mitigation mode 214 to non-ripple-mitigation mode 212 in response to $k_{EST}$ increasing to a magnitude that is greater than the threshold.

As another example, control circuitry 16 may change the magnitudes for the timing property during the operations of block 310. Consider an example where varying duty cycle is used to mitigate ripple in mode 214. Control circuitry 16 may store a plurality of duty cycle patterns. Each duty cycle pattern comprises 32 duty cycle magnitudes (one for each frequency step of the repeated cycle of the dithered clock signal). A first pattern may be associated with a first inverter power level $P_{INV1}$ whereas a second pattern may be associated with a second inverter power level $P_{INV2}$. During the operations of block 306, the inverter power level may be equal to $P_{INV1}$ and the first pattern of varying duty cycle is therefore used. During the operations of block 310, the inverter power level may be equal to $P_{INV2}$ and the second pattern of varying duty cycle is therefore used.

As described above, inverter switching frequency dithering can be employed to reduce electromagnetic interference (EMI) and improve electromagnetic compatibility (EMC). In the context of a wireless power transfer system, this can cause ripple in the rectifier output voltage (Vrect). Various techniques for mitigating this ripple have also been described above, such as manipulating an additional inverter control parameter in addition to frequency, such manipulation corresponding to the frequency dithering. As described above, such additional parameters may include manipulation of duty cycle, phase, etc.

In some embodiments, it may be advantageous to further modify such ripple compensation techniques to account for different operating conditions, such as different wireless power transfer levels, different relative positioning between the PTX and PRX, etc. As one example, duty cycle dithering can be employed in which duty cycle can be gradually changed to reduce the rectifier output voltage (Vrect) ripple by compensating for the change in wireless power transfer gain associated with the frequency change (dithering). While such duty cycle changes can significantly reduce the ripple, the "optimal" duty cycle is dependent on both the load (i.e., the amount of power being delivered by the wireless power transfer system) and relative position or magnetic alignment between the PTX and PRX. Thus, it may be desirable to change the duty cycle to compensate for the ripple, responsive in part to load and/or relative position or magnetic alignment, as well as responsive to the frequency dithering. There are at least two ways to achieve the desired duty cycle compensation. A first technique can be based on gain calculations made by cooperation between the PTX and PRX device. A second technique can be performed by the PTX alone based on measurement of its own input voltage. These techniques are described in greater detail below.

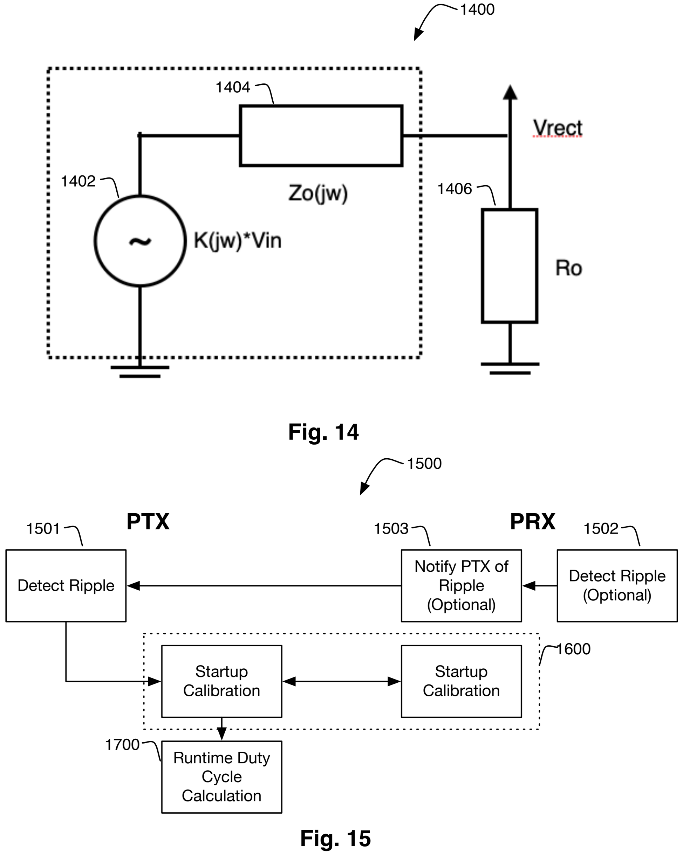

FIG. 14 illustrates a simplified equivalent circuit model 1400 of a wireless power transfer system. The model includes an AC voltage source 1402, a complex impedance 1404 representing the wireless power transfer system, and a load impedance 1406 corresponding to the load powered by the PRX. The rectifier output voltage Vrect appears across the load impedance 1406. The parameters K and Zo depicted in equivalent circuit model 1400 can be used to determine a duty cycle to mitigate rectifier voltage ripple associated with frequency dithering as described in greater detail below. These parameters may also be considered as characterizing a load line of the wireless power transfer system.

FIG. 15 is a simplified flow chart 1500 of a first duty compensation technique based on gain calculations made by cooperation between the PTX and PRX device. The left side of FIG. 15 depicts actions that can be performed by the PTX device, e.g., by control circuitry 16. The right side of FIG. 15 depicts actions that can be performed by the PRX device, e.g., by control circuitry 38. For convenience, such actions will be described as being performed by the respective PTX or PRX device, although it is understood that such actions may in fact be performed by a particular component or system of such device. Beginning with block 1501, the PTX can detect ripple that is associated with the frequency dithering described above. This can be based on its own measurements, such as measurements of the inverter output and/or voltage, inverter input current and/or voltage, or other suitable circuit parameter. In some embodiments, the PRX device can detect such a ripple (block 1502) and notify the PTX (block 1503) using an available in-band or out-of-band communication channel. The PRX device can detect such a ripple by measurements of rectifier input current and/or voltage, rectifier output current and/or voltage, or other suitable circuit parameter.

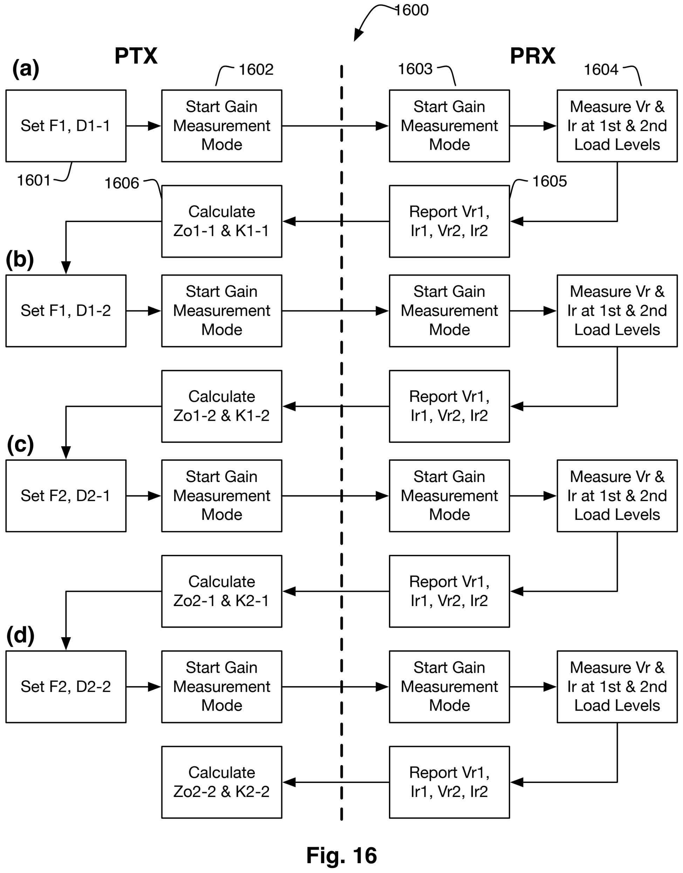

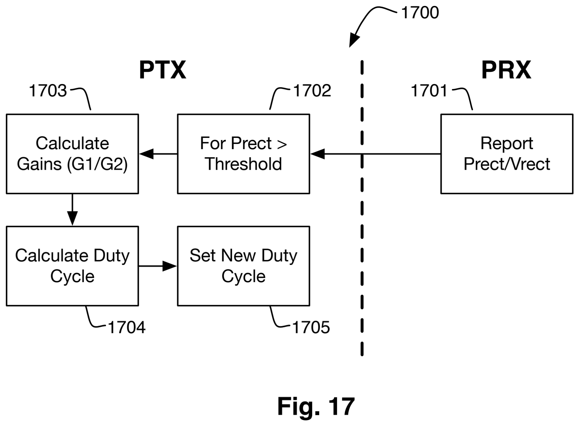

In any case, once the PTX has detected the ripple condition (block 1501), the system-including the PTX and PRX, can enter into a startup calibration phase 1600, described in greater detail below with respect to FIG. 16. Once the startup calibration phase 1600 is completed, the PTX can engage in runtime duty cycle calculation (block 1700), described in greater detail below with respect to FIG. 17.

FIG. 16 is a simplified flow chart 1600 of a startup calibration phase of the first duty cycle compensation technique. As in Fig. 15, the left side of FIG. 16 depicts actions that can be performed by the PTX device, e.g., by control circuitry 16. Likewise, the right side of FIG. 16 depicts actions that can be performed by the PRX device, e.g., by control circuitry 38. For convenience, such actions will be described as being performed by the respective PTX or PRX device, although it is understood that such actions may in fact be performed by a particular component or system of such device. Additionally, the operations described in Fig. 16 take place in four groups labeled (a)-(d), including measurements, communications, and/or calculations made by the PTX and PRX devices, respectively. The blocks corresponding to these operations are provided with reference numbers in group (a), but such reference numbers have been omitted from groups (b)-(d) for sake of brevity. Nonetheless, it should be understood that that the respective reference numbers in FIG. 16 apply to all operations of a given type, even if the number is omitted from one or more instances.

The startup calibration operations of FIG. 16 can be triggered as part of a power ramp up phase. As but one example, the operation can be triggered in response to a power level below a threshold. One such threshold may be 15W, although other values, such as 5W, 7.5W, 10W, etc. could be selected. The estimated coupling coefficient kest may also be part of such a trigger. As one example, the startup calibration may be triggered if kest <0.83 or other suitable value such as 0.80, 0.81, 0.82, 0.84, 0.85, etc.

The startup calibration operations of FIG. 16 can incorporate a plurality of gain measurements, in which the PTX measures the gain of the wireless power transfer path with cooperation of the PRX. These gain measurements can be performed at a plurality of operating frequencies and duty cycles to allow characterization of the wireless power transfer path. Thus, in block 1601 of group (a), the PTX can set an initial wireless power transfer frequency F1 and an initial duty cycle D1-1. The PTX can then (in block 1602) start a gain measurement mode (GMM). This can include communication to the PRX, reception of which is indicated in block 1603. In some embodiments, initiation of the gain measurement mode can be performed using communications according to one or more versions of the Qi wireless power transfer protocol promulgated by the Wireless Power Consortium. These communications may include an exchange of messages back and forth between the PTX and PRX, which are omitted here for sake of brevity.

Once the gain measurement mode is initiated, the PRX can measure the rectifier voltage (Vr) and rectifier current (Ir) at each of a first and second load level. For example, the PRX can measure Vr1 and Ir1 at a first load level, then switch in an additional load and measure Vr2 and Ir2 at a second load level (block 1604). In block 1605, the PRX can transmit (report) these values to the PTx. This transmission can also be according to one or more versions of the Qi protocol and can include an exchange of one or more messages, which are omitted here for brevity.

Once the PTX receives the measured voltage and current values Vr1, Ir1, Vr2, Ir2, it can communicate the parameters K and Zo depicted in equivalent circuit model 1400 of FIG. 14. More specifically, the parameter Zo can be computed according to the following equation:

$$|Z_o| = \frac{V_{r1} - V_{r2}}{I_{r2} - I_{r1}}$$

where $|Z_o|$ is the magnitude of the complex impedance depicted in FIG. 14, and Vr1, Ir1, Vr2, and Ir2 are the respective measurements of rectifier voltage and current at the two different load levels as described above. Thus, for the first gain measurement (a), a value for Zo1-1 can be determined, which corresponds to the first operating frequency and duty cycle set by PTX in block 1601.

With Zo known, the parameter K can be computed according to the following equation:

$$K = \frac{|Z_o| \cdot I_{r1} + V_{r1}}{V_{inv}}$$

where $|Z_o|$ is the magnitude of the complex impedance calculated above, Ir1 and Vr1 are the respective measurements of rectifier voltage and current described above, and Vinv is the inverter input voltage. This calculation could alternatively be made using the Ir2 and Vr2 values. Thus, for the first gain measurement (a), a value for K1-1 can be determined, which corresponds to the first operating frequency and duty cycle set by PTX in block 1601.

These operations can be repeated in a sequence of gain measurements (b)-(d) depicted in Fig. 16, with gain measurement (b) being at the first frequency F1 and a second duty cycle D1-2, gain measurement (c) being at a second frequency F2 and a third duty cycle D2-1, and gain measurement (d) being at the second frequency F2 and a fourth duty cycle D2-2. These measurements can thus produce corresponding parameters Zo1-2, K1-2, Zo2-1, K2-1, Zo2-2, and K2-2 along the lines described above. These calibration values can then be used in the run time duty cycle calculation 1700 introduced above with respect to FIG. 15 and described in greater detail below with reference to FIG. 17.

The frequency values F1 and F2 and duty cycle values at these respective frequencies may be selected by the PTX to provide suitable coverage of the expected range of operating conditions. For example, the first and second frequencies may be selected to correspond to a range of frequencies that will be caused by the dithering operations above. As one example, for a nominal operating frequency of 360kHz, F1 may be 380kHz and F2 may be 340kHz. These values may be, but need not be, the minimum and maximum values provided by the dithering operation. Similarly, the various duty cycles may be selected to correspond to a range of duty cycles expected to be chosen to provide constant gain (mitigating ripple) based on the dithered operating frequencies. For example, at the first frequency F1 (*e.g.,* 380kHz), a first duty cycle D1-1 of 0.46 and a second duty cycle of 0.5 may be selected. Likewise, at the second frequency F2 (*e.g.*, 340kHz), a third duty cycle D2-1 of 0.35 and a second duty cycle of 0.4 may be selected. In general, selecting a range between frequencies F1 and F2 that covers a significant portion of the expected dither range may provide better compensation. Additionally, with respect to the duty cycle, it should be understood that the duty cycle will always be less than 0.5, and that as the frequency decreases, decreasing the duty cycle may be necessary to keep the wireless power transfer channel gain (and thus power level) relatively constant. Thus, each of the above-described frequency and duty cycle values is merely exemplary, and any appropriate value for a given implementation may be selected.

FIG. 17 is a simplified flow chart 1700 of a run time duty cycle calculation phase of the first duty cycle compensation technique. As in FIGS. 15 and 16, the left side of FIG. 17 depicts actions that can be performed by the PTX device, *e.g.*, by control circuitry 16. Likewise, the right side of FIG. 17 depicts actions that can be performed by the PRX device, *e.g.,* by control circuitry 38. For convenience, such actions will be described as being performed by the respective PTX or PRX device, although it is understood that such actions may in fact be performed by a particular component or system of such device. During wireless power transfer, the PRX will periodically report (block 1701) its rectifier power level (Prect), *i.e.,* the amount of power being delivered to the load on the PRX, and its rectifier output voltage (Vrect) to the PTX. In some embodiments, this reporting or communication can be performed according to one or more versions of the Qi standards referenced above. In some embodiments, such reporting may include the use of MPLA packets sent at a designated time interval. The time interval may be 1.3s or other time period.

When the PTX receives the reported Prect and Vrect values, it can compare the Prect values to a threshold (block 1702), *e.g.,* to determine whether the transmitted power level exceeds the threshold. The threshold may be 15W or other suitable value such as 5W, 7.5W, 10W, 12.5W, 20W, 25W, etc. If the reported Prect value exceeds the threshold, then the PTX can calculate gains G1 and G2 (block 1703) according to the following equations:

$$G_1 = K_1 \cdot \left( \frac{R_o}{R_o + |Z_{o1}|} \right)$$

and

$$G_2 = K_2 \cdot \left( \frac{R_o}{R_o + |Z_{o2}|} \right)$$

where Ro is the load impedance given by:

$$R_o = V_{rect}^2 \Big/ P_{rect}$$

and Zo1 is Zo1-1, K1 is K1-1, Zo2 is Zo2-1, and K2 is K2-1, determined as described above.

After calculating the gains, the PTX can compute the duty cycles D1 and D2 (block 1704) by solving the following system of equations:

$$dD = D_1 - D_2$$

$$V_{rect} = G_1 \sin(\pi D_1) = G_2 \sin(\pi D_2)$$

where dD is the span of the duty cycles, G1 and G2 are the gains computed above, and Vrect is the rectifier voltage reported by the PRX. The solution to these equations provides that:

$$D_2 = \frac{1}{\pi} \tan^{-1} \left( \frac{\sin(\pi dD)}{\frac{G_2}{G_1} - \cos(\pi dD)} \right)$$

$$D_1 = D_2 + dD$$

with all parameters as described above. Finally, Doffset can be defined by:

$$D_{offset} = \frac{D_1 + D_2}{2}$$

where Doffset is the perturbation applied to the duty cycle to minimize ripple. With the duty cycles computed in block 1704, the PTX can then set a new duty cycle (block 1705) corresponding to the frequency dithering steps, thereby minimizing ripple associated with the frequency dithering.

In the above calculations, the gain calculations used values Zo1 as Zo1-1, K1 as K1-1, Zo2 as Zo2-1, and K2 as K2-1. In some embodiments these parameters may change depending on the current or determined duty cycle. As one example, the above-described values may be used when D2 is greater than or equal to some threshold, *e.g.*, 0.42. If D2 is less than the threshold, then the other values, i.e., Zo1 as Zo1-2, K1 as K1-2, Zo2 as Zo2-2, and K2 as K2-2 could be used instead, as these values were calculated using the lower (and thus closer duty cycles) in the calibration phase described above with reference to FIG. 16. Additionally, it may be desirable for the PTX to set bounds on the duty cycles values, for example D2 may be constrained to a range of 0.35 to 0.445 (or other suitable values), and the maximum duty cycle may be constrained to something greater than D2 and always less than 0.5.

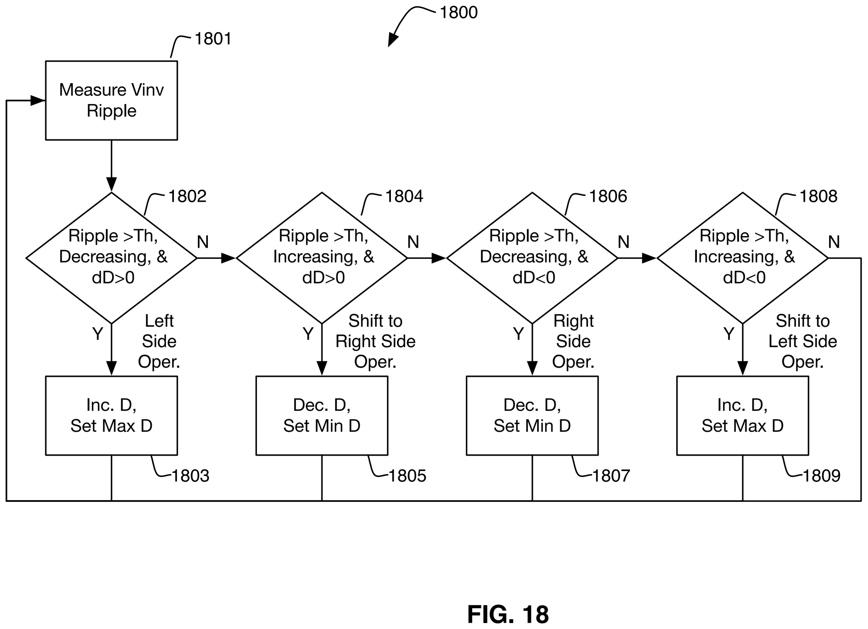

FIG. 18 is a simplified flow chart 1800 of a second duty cycle compensation technique performed solely by the PTX without additional data or other cooperation from the PRX. For convenience, such actions will be described as being performed by the PTX, although it is understood that such actions may in fact be performed by a particular component or system of such device. This compensation technique is based on the PTX monitoring the inverter input voltage (Vinv) ripple, which is caused by the corresponding ripple on the PRX. Thus, in block 1801, the PTX can measure the Vinv ripple resulting in a value Vinvpp[n], where n is the number of the measurement. Then, in block 1802 the PTX can compare the measured ripple Vinvpp[n] to a threshold (*e.g.*, 100mV) and a previously measured value Vinvpp[n-1], as well as performing a comparison of the present duty cycle (D[n]) to the previous duty cycle (D[n-1]). Responsive to the following condition:

- the ripple is greater than the threshold (*i.e.,* Vinvpp[n] >Th);
- the ripple value is decreasing over time (*i.e.,* Vinvpp[n] < Vinvpp[n-1]; and
- the duty cycle is increasing over time (*i.e.,* dD > 0, where dD=D[n]-D[n-1];

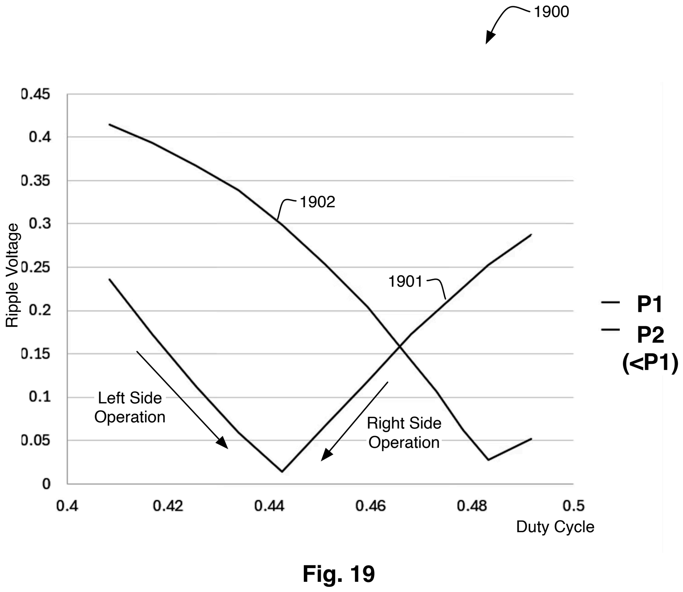

then the PTX can, in block 1803, increment the duty cycle by some small value *(e.g.,* 0.1, *i.e.,* D[n+1]=D[n]+0.1) and set a maximum duty cycle value, *e.g.*, 0.445. This can be described as left side operation with reference to the curve of Fig. 19, discussed below. The PTX can then return to block 1801 to perform another ripple measurement.

Otherwise, if one or more of the above-described conditions of block 1802 are not met, in block 1804, the PTX can determine whether:

- the ripple is greater than the threshold (*i.e.,* Vinvpp[n] >Th);
- the ripple value is increasing over time (*i.e.,* Vinvpp[n] > Vinvpp[n-1]; and
- the duty cycle is increasing over time (*i.e.,* dD > 0, where dD=D[n]-D[n-1].

Responsive to these conditions being met, the PTX can, in block 1805, decrement the duty cycle by some small value (*e.g.,* 0.1, *i.e.,* D[n+1]=D[n]-0.1) and set a minimum duty cycle value, *e.g.,* 0.35. This can be described as a shift to right side operation with reference to the curve of Fig. 19, discussed below. The PTX can then return to block 1801 to perform another ripple measurement.

Otherwise, if one or more of the above-described conditions of block 1804 are not met, in block 1807, the PTX can determine whether:

- the ripple is greater than the threshold (*i.e.,* Vinvpp[n] >Th);
- the ripple value is decreasing over time (*i.e.,* Vinvpp[n] < Vinvpp[n-1]; and
- the duty cycle is decreasing over time (*i.e.,* dD < 0, where dD=D[n]-D[n-1].

Responsive to these conditions being met, the PTX can, in block 1806, decrement the duty cycle by some small value (*e.g.,* 0.1, *i.e.,* D[n+1]=D[n]-0.1) and set a minimum duty cycle value, *e.g.,* 0.35. This can be described right side operation with reference to the curve of Fig. 19, discussed below. The PTX can then return to block 1801 to perform another ripple measurement.

Otherwise, if one or more of the above-described conditions of block 1806 are not met, in block 1808, the PTX can determine whether:

- the ripple is greater than the threshold (*i.e.,* Vinvpp[n] >Th);
- the ripple value is increasing over time (*i.e.,* Vinvpp[n] > Vinvpp[n-1]; and
- the duty cycle is decreasing over time (*i.e.,* dD < 0, where dD=D[n]-D[n-1].

Responsive to these conditions being met, the PTX can, in block 1809, increment the duty cycle by some small value (*e.g.,* 0.1, *i.e.,* D[n+1]=D[n]+0.1) and set a maximum duty cycle value, *e.g.,* 0.445. This can be described as a shift to left side operation with reference to the curve of Fig. 19, discussed below. The PTX can then return to block 1801 to perform another ripple measurement.

Finally, if none of the conditions of blocks 1802, 1804, 1806, or 1808 are met (e.g., because the ripple is less than the threshold, the ripple is neither increasing nor decreasing, and/or the duty cycle is not changing), then the PTX can simply return to block 1801 and perform another ripple measurement, repeating the process described above without changing the duty cycle as in blocks 1803, 1805, 1807, or 1809.

FIG. 19 is a plot 1900 showing ripple voltage vs. duty cycle when using the second duty cycle compensation technique. Curve 1901 corresponds to a first power level P1 (*e.g.,* 50W), and curve 1902 corresponds to a second power level P2 *(e.g.,* 25W) less than the first power level P1. For both curves, beginning on the left side, ripple voltage decreases with increases in duty cycle until some minimum value is reached. The minimum ripple value and/or the associated duty cycle may be different for different power levels. Nonetheless for a given power level (and relative position of PTX and PRX) there will be an optimal duty cycle value at which the ripple is minimized. For any given power level, below this optimal duty cycle, increases in duty cycle will reduce the ripple voltage. This is what is described above as left side operation. Conversely, for any given power level, above the optimal duty cycle, increases in duty cycle will increase the ripple voltage, while decreases in duty cycle will decrease the ripple voltage. This is what is described above as right side operation.

Thus, when the PTX is measuring the ripple and incrementing or decrementing the duty cycle, as described above, the PTX will make the decision whether to increment or decrement based in part on whether the previous increment or decrement achieved the desired result. If not, then the control logic will have to transition to the other side of the curve to achieve the desired results. Additionally, by having a Vinv ripple threshold value (*e.g.,* 100mV) below which the duty cycle is not altered, there can be a "dead-band" at an acceptably small ripple voltage value where no changes to duty cycle are performed. Additionally, the control technique described above can be initiated with an appropriate initial duty cycle value, *e.g.*, 0.5.

This second technique for duty cycle compensation relies on measurements of the inverter input voltage Vinv. In some embodiments, there may be noise associated with these measurements that is associated with sources other than perturbations caused by the frequency dithering. Thus, the measured ripple voltage may be obscured by such noise. However, because the frequency of the ripple associated with frequency dithering is known, the measured voltages (*e.g.*, block 1801) can be filtered, either in the analog domain before sampling and/or in the digital domain after sampling, to isolate the ripple value from other noise sources. One digital domain filtering technique that may be advantageous in certain applications is the Goertzel algorithm, as it can provide relatively simple computation that can more easily be within the range of PTX control circuitry 16. However, any of a variety of filtering techniques could also be used depending on the computational resources available and desired levels of performance.

Reducing ripple, *e.g.*, ripple of the rectifier voltage Vrect can have a variety of benefits. One such benefit can be reduction of audible noise. In some embodiments Vrect ripple can be correlated to audible noise, for example, if a ceramic capacitor is used for the DC link. Depending on the switching frequency (*e.g.*, 360kHz) and number of dithering steps (*e.g.*, 32 steps), frequencies in the audible range (*e.g.*, 360kHz/32=11.25kHz) may be generated. This and other advantages, such as improved EMI and EMC, can also result from reducing the ripple associated with frequency dithering as described herein.

The foregoing is merely illustrative, and various modifications can be made to the described embodiments. The foregoing embodiments may be implemented individually or in any combination.

**NUMBERED STATEMENTS OF INVENTION**

    1. An electronic device configured to transfer wireless power to an additional electronic device, the electronic device comprising:

        a wireless power transfer coil;
        an inverter configured to receive switching signals based on a dithered clock signal and output corresponding alternating current signals to the wireless power transfer coil; and
        control circuitry that generates the dithered clock signal,

            wherein the dithered clock signal has a plurality of frequency steps,
            wherein one or more timing properties of the switching signals are different between at least two different frequency steps of the plurality of frequency steps to compensate for different wireless power transfer gains at the at least two different frequency steps.

2. The electronic device of statement 1, wherein the inverter comprises four transistors controlled by two switching signals.

3. The electronic device of statement 1 wherein the timing properties include operating phase of the inverter.

4. The electronic device of statement 1 wherein the timing properties include duty cycle of the switching signals.

5. The electronic device of statement 4, wherein the control circuitry is configured to select the one or more timing properties of the at least two different frequency steps based on a real time operating conditions determined in communication with the additional electronic device.

6. The electronic device of statement 5, wherein the real time operating condition comprises received power information for the additional electronic device.

7. The electronic device of statement 6, wherein the control circuitry is configured to receive the received power information from the additional electronic device using the wireless power transfer coil.

8. The electronic device of statement 6 wherein the received power information includes calibration measurements of rectifier voltage and rectifier current of the additional electronic device at a plurality of operating frequencies, duty cycles, and power levels.

9. The electronic device of statement 8 wherein the control circuitry calculates one or more gain values based at least in part on the calibration measurements.

10. The electronic device of statement 6 wherein the received power information includes run time measurements of rectifier power and rectifier voltage of the additional electronic device.

11. The electronic device of statement 10 wherein the control circuitry calculates one or more timing properties values based at least in part on the run time measurements.

12. The electronic device of statement 6, wherein the real time operating condition comprises a ripple message reported by the additional electronic device.

13. The electronic device of statement 12, wherein the control circuitry is configured to receive the ripple magnitude from the additional electronic device using the wireless power transfer coil.

14. The electronic device of statement 4, wherein the control circuitry selects the one or more timing properties of the at least two different frequency steps based on real time operating conditions determined without communication with the additional electronic device.

15. The electronic device of statement 14, wherein the real time operating conditions include an inverter input voltage ripple measured by the control circuitry.

16. The electronic device of statement 15 wherein the one or more timing properties includes a duty cycle and the control circuitry increments or decrements the duty cycle responsive to:

comparison of the inverter input voltage ripple measured by the control circuitry to a threshold; a determination whether the ripple voltage is increasing or decreasing over time; and a determination whether the duty cycle is increasing or decreasing over time.

17. The electronic device of statement 1, wherein the dithered clock signal has the plurality of frequency steps in a repeated cycle, wherein the repeated cycle of the dithered clock signal comprises a step function that approximates a waveform, and wherein the dithered clock signal has a unique frequency magnitude at every one of the plurality of frequency steps during the repeated cycle.

18. The electronic device of statement 17, wherein the waveform comprises a triangular waveform.

19. The electronic device of statement 17, wherein the plurality of frequency steps during the repeated cycle comprises thirty-two frequency steps during the repeated cycle.

20. An electronic device comprising:

a wireless power transfer coil; an inverter configured to receive switching signals based on a dithered clock signal and output corresponding alternating current signals to the wireless power transfer coil; and control circuitry configured to generate the dithered clock signal,

wherein the dithered clock signal has a plurality of frequency steps with unique frequency magnitudes, and wherein the dithered clock signal has unique timing properties for at least two of the plurality of frequency steps selected to compensate for different wireless power transfer gains at the at least two different frequency steps.

21. The electronic device of statement 20 wherein the timing properties include operating phase of the inverter.

22. The electronic device of statement 20 wherein the timing properties include a duty cycle.

23. The electronic device of statement 20, wherein the control circuitry selects the unique timing properties of the at least two different frequency steps based on a real time operating conditions determined in communication with an additional electronic device.

24. The electronic device of statement 20, wherein the control circuitry selects the unique timing properties of the at least two different frequency steps based on real time operating conditions determined without communication with an additional electronic device.

**Claims**

1.  An electronic device configured to transfer wireless power to an additional electronic device, the electronic device comprising:

a wireless power transfer coil; an inverter configured to receive switching signals based on a dithered clock signal and output corresponding alternating current signals to the wireless power transfer coil; and control circuitry that generates the dithered clock signal,

wherein the dithered clock signal has a plurality of frequency steps, wherein one or more timing properties of the switching signals are different between at least two different frequency steps of the plurality of frequency steps to compensate for different wireless power transfer gains at the at least two different frequency steps.

2.  The electronic device of claim 1, wherein the inverter comprises four transistors controlled by two switching signals.

3. The electronic device of claim 1 or 2 wherein the timing properties include operating phase of the inverter.

4. The electronic device of any one of claims 1-3 wherein the timing properties include duty cycle of the switching signals.

5. The electronic device of claim 4, wherein the control circuitry is configured to select the one or more timing properties of the at least two different frequency steps based on a real time operating conditions determined in communication with the additional electronic device.

6. The electronic device of claim 5, wherein the real time operating condition comprises received power information for the additional electronic device.

7. The electronic device of claim 6, wherein the control circuitry is configured to receive the received power information from the additional electronic device using the wireless power transfer coil.

8. The electronic device of claim 6 or 7 wherein the received power information includes calibration measurements of rectifier voltage and rectifier current of the additional electronic device at a plurality of operating frequencies, duty cycles, and power levels.

9. The electronic device of claim 8 wherein the control circuitry calculates one or more gain values based at least in part on the calibration measurements.

10. The electronic device of claim 6 wherein the received power information includes run time measurements of rectifier power and rectifier voltage of the additional electronic device.

11. The electronic device of claim 10 wherein the control circuitry calculates one or more timing properties values based at least in part on the run time measurements.

12. The electronic device of claim 6, wherein the real time operating condition comprises a ripple message reported by the additional electronic device.

13. The electronic device of any one of claims 4-12, wherein the control circuitry selects the one or more timing properties of the at least two different frequency steps based on real time operating conditions determined without communication with the additional electronic device.

14. The electronic device of claim 13, wherein the real time operating conditions include an inverter input voltage ripple measured by the control circuitry.

15. The electronic device of claim 14 wherein the one or more timing properties includes a duty cycle and the control circuitry increments or decrements the duty cycle responsive to:

comparison of the inverter input voltage ripple measured by the control circuitry to a threshold; a determination whether the ripple voltage is increasing or decreasing over time; and a determination whether the duty cycle is increasing or decreasing over time.

16. The electronic device of any one of claims 1-15, wherein the dithered clock signal has the plurality of frequency steps in a repeated cycle, wherein the repeated cycle of the dithered clock signal comprises a step function that approximates a waveform, and wherein the dithered clock signal has a unique frequency magnitude at every one of the plurality of frequency steps during the repeated cycle.

**FIG. 1**

**FIG. 2**

**FIG. 3**

**FIG. 4**

FIG. 5

**FIG. 6**

EP 4 765 609 A1

**FIG. 7**

FIG. 8A

FIG. 8B

**FIG. 9A**

**FIG. 9B**

EP 4 765 609 A1

**FIG. 10**

EP 4 765 609 A1

θ = 0°

SW1

SW2

**Fig. 11A**

θ = 180°

SW1

SW2

**Fig. 11B**

212

FIRST MODE
(NO RIPPLE MITIGATION)

214

SECOND MODE
(WITH RIPPLE MITIGATION)

**Fig. 12**

GATHER INFORMATION (E.G., $P_{INV}$, $I_{INV}$, $V_{IN}$, $P_{RECT}$, $V_{RECT}$, $k_{EST}$, RIPPLE MAGNITUDE INFORMATION, PRX DEVICE TYPE, ETC.) —— 302

SELECT A MODE FOR THE POWER TRANSMITTING CIRCUITRY BASED ON THE GATHERED INFORMATION —— 304

RIPPLE-MITIGATION MODE

SELECT MAGNITUDES FOR A TIMING PROPERTY OF THE SWITCHING SIGNALS FOR THE INVERTER —— 306

NON-RIPPLE-MITIGATION MODE

GATHER ADDITIONAL INFORMATION (E.G., $P_{INV}$, $I_{INV}$, $V_{IN}$, $P_{RECT}$, $V_{RECT}$, $k_{EST}$, RIPPLE MAGNITUDE INFORMATION, ETC.) —— 308

TAKE ADDITIONAL ACTION BASED ON THE ADDITIONAL INFORMATION (E.G., SWITCH THE MODE OF THE POWER TRANSMITTING CIRCUITRY, CHANGE THE MAGNITUDES FOR THE TIMING PROPERTY, ETC.) —— 310

**Fig. 13**

1400

1404

Zo(jw)

Vrect

1402

~ K(jw)*Vin

1406

Ro

**Fig. 14**

1500

**PTX**

1501

Detect Ripple

**PRX**

1503

Notify PTX of Ripple (Optional)

1502

Detect Ripple (Optional)

1600

Startup Calibration ⟷ Startup Calibration

1700

Runtime Duty Cycle Calculation

**Fig. 15**

**Fig. 16**

**PTX**

**PRX**

1703

1700

1702

1701

| Calculate Gains (G1/G2) | ← | For Prect > Threshold | ← | Report Prect/Vrect |
|---|---|---|---|---|

↓

| Calculate Duty Cycle | → | Set New Duty Cycle |
|---|---|---|

1704

1705

**Fig. 17**

**FIG. 18**

**Fig. 19**

Europäisches
Patentamt

European
Patent Office

Office européen
des brevets

# EUROPEAN SEARCH REPORT

**Application Number**

EP 25 22 4784

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/152058 A1 (LEE WOORAM [KR] ET AL) 31 May 2018 (2018-05-31) * abstract * * paragraph [0001] - paragraph [0152]; figures 1-15B * | 1-16 | INV. H02M1/44 H02M7/5387 H02J50/12 H02M1/14 |
| X | US 2020/295603 A1 (OGURA KOJI [JP]) 17 September 2020 (2020-09-17) * abstract * * paragraph [0001] - paragraph [0151]; figures 1-18 * | 1-16 | ADD. H02M3/00 |
| X | US 2022/149658 A1 (O CHANGHAK [KR] ET AL) 12 May 2022 (2022-05-12) * abstract * * paragraph [0001] - paragraph [0190]; figures 1-10B * | 1-16 | |

**TECHNICAL FIELDS SEARCHED (IPC)**

H02M
H02J

The present search report has been drawn up for all claims

| Place of search | Date of completion of the search | Examiner |
|---|---|---|
| The Hague | 6 May 2026 | Adami, Salah-Eddine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 4784

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2026

| Patent document cited in search report | Publication date | Patent family member(s) | Publication date |
|---|---|---|---|
| US 2018152058 A1 | 31-05-2018 | CN 108123548 A | 05-06-2018 |
| | | EP 3346582 A1 | 11-07-2018 |
| | | KR 20180060531 A | 07-06-2018 |
| | | US 2018152058 A1 | 31-05-2018 |
| US 2020295603 A1 | 17-09-2020 | JP 7039515 B2 | 22-03-2022 |
| | | JP 2020150775 A | 17-09-2020 |
| | | US 2020295603 A1 | 17-09-2020 |
| US 2022149658 A1 | 12-05-2022 | KR 20200101237 A | 27-08-2020 |
| | | US 2022149658 A1 | 12-05-2022 |
| | | WO 2020171476 A1 | 27-08-2020 |

EPO FORM P0459

For more details about this annex : see Official Journal of the European Patent Office, No. 12/82

**EP 4 765 609 A1**

REFERENCES CITED IN THE DESCRIPTION

**Patent documents cited in the description**

- US 63735735
- US 63847620